# EUROPEAN PATENT APPLICATION

(11) **EP 1 855 132 A2**
(43) Date of publication of application: **14.11.2007**
(21) Application number: 07115416.5
(22) Date of filing: 12.03.2002
(51) Int. Cl.: G02B 6/293, H04J 14/02

(54) **Trimmable optical add/drop multiplexer devices**

(30) Priority: 12.03.2001 US 274976; 14.02.2002 US 75138
(62) Divisional of application: 02005618.0
(71) Applicant: E.I. du Pont de Nemours and Company, Wilmington, DE 19898 (US)
(72) Inventor: Eldada, Louay A., Lexington, MA 02421 (US)
(74) Representative: Valea AB

(57) **Abstract**

The present invention is directed to a hitless errorless dynamic optical add/drop multiplexer comprising:
A first optical circulator (1102), a first switch (1106) connected to the first circulator;
a filter path (1114) comprising a tunable reflective filter connected to the first switch;
a bypass path (1118) comprising an optical path connected to the first switch;
a second switch (1108) connected to the filter path, and to the optical path, the first and second switch in a first state causes the optical signal to be directed along the filter path wherein the reflective filter segregates a tuned wavelength from the optical signal and reflects the tuned wavelength back to the first circulator, which outputs the tuned wavelength via the first port;
the first and second switch in a second state cause the optical signal to be directed along the bypass path which leaves the optical signal substantially unaffected; and
a second optical circulator (1104) to receive the optical signal from the second switch, to output the optical signal and to receive an add optical signal, the add optical signal comprising the same wavelength as the tuned wavelength.

## Description

### PRIORITY INFORMATION

This application claims priority from provisional application Ser. No. 60/274,976 filed March 12, 2002.

### BACKGROUND OF THE INVENTION

The invention relates to the field of optical components.

One method of increasing the transportable bandwidth in optical communications networks is a technique known as wavelength division multiplexing (WDM). WDM is a technology that combines two or more wavelengths of light for transmission along a single optical waveguide. Each wavelength represents a channel that can carry a bit stream, i.e. content. Wavelength and channel are used herein interchangeably. Transporting two or more wavelengths on a waveguide effectively increases the aggregate bandwidth of the waveguide. For example, if 40 wavelengths, each capable of 10 Gb/s are used on a single fiber, the aggregate bandwidth of the fiber becomes 400 Gb/s.

A similar manner of increasing transportable bandwidth has been termed dense wavelength division multiplexing (DWDM). DWDM generally involves combining a larger number of wavelengths onto a fiber than WDM. While DWDM deals with more difficult issues associated with multiplexing a larger number of wavelengths on a fiber, such as cross-talk and non-linear effects, WDM and DWDM are typically used interchangeably.

A number of optical components are used in WDM networks, such as optical multiplexers (MUX), optical demultiplexers (DEMUX), optical add/drop multiplexers (OADM), wavelength selective switches (WSS) and optical cross connects (OXC). A MUX takes different channels from different waveguides and combines them as a WDM signal into one waveguide. A DEMUX divides a WDM signal received from a waveguide into its different channels and couples each channel into a different waveguide. An OADM selectively removes a subset of the total channels from a WDM signal and selectively adds in the same subset of the total channels with different content. A WSS selectively switches the contents of a subset of the total channels between WDM signals, i.e. amongst L WDM signals that have N channels, the contents of any M of the N channels are selectively switched. An OXC performs the same function as a WSS, except that all N channels are switchable, i.e. amongst L WDM signals that have N channels, the contents of the N channels can be selectively switched.

When one of these optical components can be tuned to operate on different channels by software control, or otherwise, it is generally referred to as being dynamic. If a dynamic optical component can be tuned from operating on a source channel (e.g., channel A) to operating on a destination channel (e.g., channel C) without dropping, switching or otherwise removing intermediate channels (e.g., channel B) from the WDM signal, the component is generally referred to as being hitless. Further, if the bit-error-rate (BER) of intermediate channels is not significantly affected during tuning, then the optical component is generally referred to as being errorless. Lastly, if the optical component contains trimmable elements that allow the component to be fine-tuned for optimal operation, then it is generally referred to as being trimmable.

### SUMMARY OF THE INVENTION

One aspect of the present invention provides a dynamic optical add/drop multiplexer comprising a first optical circulator, a second optical circulator and a tunable reflective filter formed on a single substrate. The first optical circulator has a first port to receive a multiple wavelength optical signal, a second port to output the received multiple wavelength optical signal, and a third port. The tunable reflective filter is connected to the second port of the first circulator to receive the optical signal. The filter segregates a tuned wavelength from the optical signal and reflects the tuned wavelength back to the first circulator, which outputs the tuned wavelength via the third port. The second optical circulator has a first port to receive the optical signal from the filter, a second port to receive an add optical signal comprising the same wavelength as the tuned wavelength, and a third port to output the multiple wavelength optical signal and the add optical signal.

Another aspect of the present invention provides a trimmable Mach-Zehnder Interferometer (MZI) based dynamic optical add/drop multiplexer. The multiplexer has a first optical path with a tunable reflective filter formed therein and a second optical path having a tunable reflective filter formed therein. The first optical path has a first phase shifter associated with it. The second optical path has a second phase shifter associated with the second optical path. A first 3dB coupler has a first port to receive a multiple wavelength optical signal and substantially evenly splits the signal into the first optical path and the second optical path. The tunable reflective filters of the first and second paths segregate a tuned wavelength from the split optical signal and reflect the tuned wavelength back to the first 3dB coupler, which outputs the tuned wavelength via a second port. A second 3dB coupler receives the split optical signal from the first and second optical paths and combines the split signal into a single signal that outputs via a first port. The second 3dB coupler also has a second port to receive an add optical signal comprising the same wavelength as the tuned wavelength wherein the add optical signal is additionally output via the first port. The phase shifters balance the optical lengths of the first and second optical path.

Another aspect of the present invention provides an optical device comprising a first directive coupler, a tunable reflective filter, a second directive coupler and a switch. The first directive coupler has a first port to receive a multiple wavelength optical signal, a second port to output the received multiple wavelength optical signal, and a third port. The tunable reflective filter is connected to the second port of the first directive coupler to receive the optical signal. The filter segregates a tuned wavelength from the optical signal and reflects the tuned wavelength back to the first directive coupler, which outputs the tuned wavelength via the third port. The second directive coupler has a first port to receive the optical signal from the filter, a second port to output the multiple wavelength optical signal, and a third port. Any optical signals that input the third port, output the first port. The switch has an input port connected to the third port of the first directive coupler to receive the tuned wavelength, a first output port connected to the third port of the second directive coupler, and a second output port. The switch in a first state causes the tuned wavelength to be output to the third port of the second directive coupler via the first output port of the switch. The switch in a second state causes the tuned wavelength to be output via the second output port of the switch.

Another aspect of the present invention provides an optical device comprising first, second, third and fourth directive couplers and a cross bar switch. The first and second directive couplers have at least one tunable reflective filter connected therebetween. The first directive coupler has a first port to receive a multiple wavelength optical signal, a second port to output the received multiple wavelength optical signal to the at least on filter, and a third port. The filter segregates a tuned wavelength from the optical signal and reflects the tuned wavelength back to the first directive coupler, which outputs the tuned wavelength via the third port. The second directive coupler has a first port to receive the optical signal from the filter, a second port to output the multiple wavelength optical signal, and a third port, wherein any optical signals that input the third, output the first port. Similarly the third and fourth directive couplers have at least one tunable reflective filter connected therebetween. The third directive coupler has a first port to receive a multiple wavelength optical signal, a second port to output the received multiple wavelength optical signal to the at least on filter, and a third port. The filter segregates at least one tuned wavelength from the optical signal and reflects the tuned wavelength back to the third directive coupler, which outputs the tuned wavelength via the third port. The fourth directive coupler having a first port to receive the optical signal from the filter, a second port to output the multiple wavelength optical signal, and a third port, wherein any optical signals that input the third port, output the first port. The cross bar switch in a first state connects the third port of the first directive coupler to the third port of the fourth directive coupler and connects the third port of the third directive coupler to the third port of the second directive coupler. In a second state, the cross bar switch connects the third port of the first directive coupler to the third port of the second directive coupler and connects the third port of the third directive coupler to the third port of the fourth directive coupler.

Another aspect of the present invention provides a hitless errorless dynamic optical add/drop multiplexer. A first optical circulator has a first port to receive a multiple wavelength optical signal, a second port to output the received multiple wavelength optical signal, and a third port. A first switch has an input port, a first output port, and a second output, the input port is connected to the second port of the first circulator. A filter path comprising a tunable reflective filter is connected to the first output port of the first switch. A bypass path is connected to the second output port of the first switch. A second switch has a first input port connected to the filter path, a second input port connected to the bypass path, and an output port. In a first state, the first and second switch cause the optical signal to be directed along the filter path wherein the reflective filter segregates a tuned wavelength from the optical signal and reflects the tuned wavelength back to the first circulator, which outputs the tuned wavelength via the third port. In a second state, the first and second switch cause the optical signal to be directed along the bypass path which leaves the optical signal substantially unaffected. A second optical circulator has a first port connected to the output port of the second switch to receive the optical signal from the second switch, a second port to output the optical signal and a third port to receive an add optical signal, the add optical signal comprising the same wavelength as the tuned wavelength. The add optical signal is output to the second port of the second optical circulator with the optical signal.

Another aspect of the present invention provides a hitless errorless dynamic optical add/drop multiplexer. A first optical path has a tunable reflective filter formed therein and a second optical path has a tunable reflective filter formed therein. A first switch has an input port to receive a multiple wavelength optical signal, a first output port to output the optical signal when the first switch is in a first state, and a second output port to output the optical signal when the first switch is in a second state. A first 3dB coupler has a first port connected to the second output port of the first switch to receive the multiple wavelength optical signal and substantially evenly split the signal into the first optical path and the second optical path. The tunable reflective filters of the first and second paths segregate a tuned wavelength from the split optical signal and reflect the tuned wavelength back to the first 3dB coupler, which outputs the tuned wavelength via a second port. A second 3dB coupler receives the split optical signal from the first and second optical paths and combines the split signal into a single signal that outputs a first port. The second 3dB coupler has a second port to receive an add optical signal comprising the same wavelength as the tuned wavelength. The add optical signal is additionally output to the first port. A second switch has a first input port connected to the first port of the second 3dB coupler to receive the optical signals, a second input port connected to the second output port of the first switch, and an output port to output optical signals from the second 3dB coupler when the second switch is in a first state and to output optical signals from the bypass optical path when the second switch is in a second state.

### BRIEF DESCRIPTION OF THE DRAWINGS

Figures 1 and 2a-c illustrate single-channel dynamic optical OADMs according to the principles of the present invention.
Figures 3a-c and 4a-b illustrate single-channel hitless dynamic optical add/drop multiplexers according to the principles of the present invention.
Figures 5a-b and 6 illustrate multi-channel hitless dynamic optical add/drop multiplexers according to the principles of the present invention.
Figures 7a-b and 8 illustrate hitless dynamic demultiplexers according to the present invention.
Figures 9a-9c and 10a-10c illustrate M-channel Hitless Dynamic wavelength selective switches according to the principles of the present invention.
Figures 11a-b and 12a-b illustrate single-channel errorless hitless dynamic optical add/drop multiplexers according to the present invention.
Figures 13a-b and 14 illustrate multi-channel errorless hitless dynamic demultiplexers according to the present invention.
Figure 15 illustrates a polarization independent errorless hitless dynamic demultiplexer according to the present invention.
Figure 16 illustrates a multi-stage polarization independent errorless hitless dynamic demultiplexer according to the present invention.

### DETAILED DESCRIPTION OF THE INVENTION

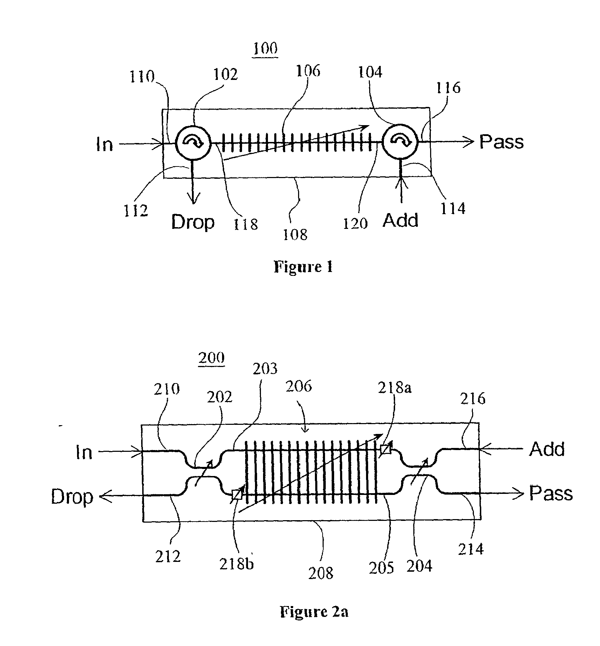

Figures 1 and 2a-c illustrate single-channel dynamic optical OADMs according to the principles of the present invention. As previously described, generally a dynamic OADM can be selectively tuned to remove a wavelength from a WDM signal and add in the same wavelength with different content.

Figure 1 illustrates a dynamic OADM **100** of the present invention comprising a tunable reflective filter **106** and 3-port optical circulators **102** and **104** integrated on the same substrate **108.** Tunable reflective filter **106** is, for example, a tunable Bragg grating. Integrated circulators **102** and **104** are based, for example, on planar MZIs using either polarization splitting and nonreciprocal polarization conversion, or nonreciprocal phase shift within the interferometric arms.

Filter **106** has one end connected to the third port **118** of circulator **102** and its other end connected to the first port **120** of circulator **104.** First port **110** of circulator **102** is the In port of dynamic OADM **100,** while third port **116** of circulator **104** is the Pass port. The second port **112** of circulator **102** and the second port **114** of circulator **104** are, respectively, the Drop port and the Add port of dynamic OADM **100.**

During operation, a WDM signal comprising a plurality of channels (e.g., channel A, B, C and D) is input via the In port **110** of OADM **100.** Circulator **102** outputs this signal via its third port **118** to filter **106.** Filter **106** reflects the channel to which it is tuned (e.g., channel A) back to circulator **102**, while allowing the rest of the channels (e.g., B, C and D) to pass through. Circulator **102** outputs the reflected channel out Drop port **112.** The channels that are passed through are input to circulator **104** via its first port **120** and, consequently, exit out of Pass port **116.**

For each setting of tunable filter **106,** the same channel as the one dropped, except with different content (e.g., A'), can be added by inputting it into Add port **114.** The added channel is directed by circulator **104** out its first port **120** to filter **106.** Because the added channel is the same one that filter **106** is tuned to, filter **106** reflects it back to the first port **120** of circulator **104.** Circulator **104** then outputs it out Pass port **116** such that a WDM signal comprising the passed through channels and the added channel (e.g., channels A', B, C and D) is output via Pass port **116.**

Figure 2a illustrates a dynamic OADM **200** of the present invention based on a trimmable MZI configuration. The MZI configuration has two optical paths **203** and **205** with tunable filters **206** (e.g., Bragg gratings) formed in them. While a filter can be formed separately in each arm, filters 206 are preferably formed from a single Bragg grating that spans both paths **203** and **205.** The tuning of filters **206** to operate on different channels (e.g., by heating for thermo-optical tuning) is preferably done with a single element (e.g., a single thin film heater) that tunes them simultaneously. The MZI configuration is made trimmable by phase shifters **218a** and **218b** (e.g., thin film heaters), which are associated with optical paths **203** and **205** so that their optical lengths can be adjusted to insure they are balanced. Optical paths **203** and **205** are connected between two 3dB directional couplers **202** and **204.** The arms of 3dB directional couplers **202** and **204** can be symmetric or asymmetric in width, however, the asymmetric design enables a wavelength-flattened response.

During operation, a WDM signal comprising a plurality of channels (e.g., channel A, B, C and D) is input via the In port of dynamic OADM **200,** i.e. first input **210** of coupler **202.** Coupler **202** splits the input power of the WDM signal substantially evenly into optical paths **203** and **205.** The Bragg gratings in optical paths **203** and **205** reflect the channel they are tuned to (e.g., channel A) back into coupler **202,** while allowing the rest of the channels (e.g., B, C and D) to be transmitted through. The optical signal carrying the transmitted channels merges in second coupler **204.** When optical paths **203** and **205** are balanced, the optical signal of the transmitted channels is transferred to a first port **214** of second coupler **204** (i.e., the Pass port), with little signal being transmitted to a second port **216** of second coupler **204**.

Similar to the transmitted signal, the optical signal of the reflected channel merges in first coupler **202.** Like the transmitted channels, when paths **203** and **205** are balanced, the optical signal of the reflected channel is carried out a second port **212** of first coupler **202** (i.e. the Drop port) with little leakage to first port **210** of first coupler **202.**

The same channel as the one dropped, except with different content (e.g., A'), can be added by inputting it into Add port **216** of coupler **204.** Coupler **204** splits the input power of the added channel evenly into optical paths **203** and **205.** The Bragg gratings in optical paths **203** and 205 reflect the added channel back into coupler **204,** which transfers the optical signal of the added channel to Pass port **216.** As a result, a WDM signal comprising the passed through channels and the added channel (e.g., channels A', B, C and D) is output via Pass port **214.**

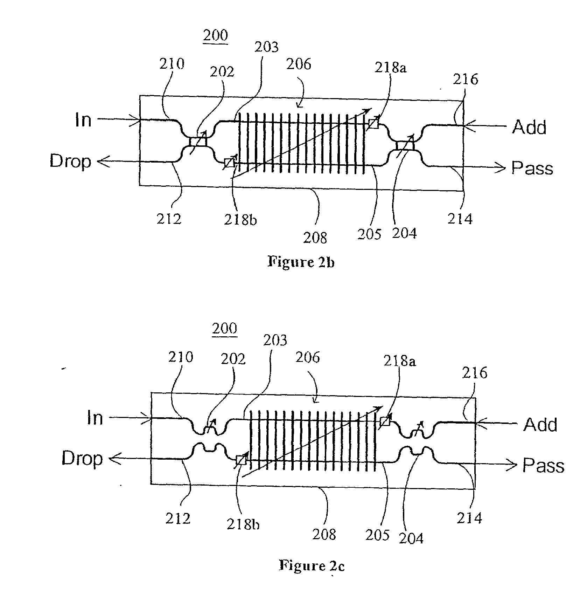

As illustrated in figure 2b, the use of 3dB couplers **202** and **204** based on Multimode Interference (MMI) couplers in place of directional couplers is within the scope of the present invention. Similarly, as illustrated in figure 2c, the use of 3dB couplers **202** and **204** based on MZI couplers in place of directional couplers is within the scope of the present invention. MZI couplers can be symmetric or asymmetric in arm length, however, the asymmetric design enables a wavelength-flattened response.

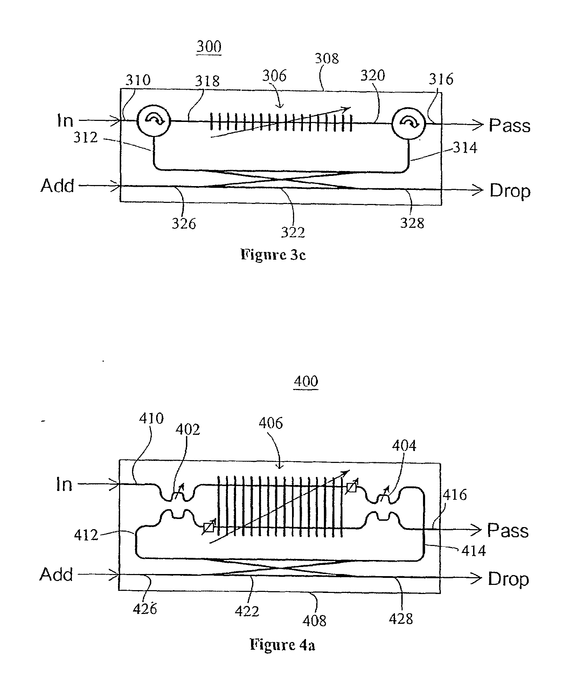

Figures 3a-c and 4a-b illustrate single-channel HDOADMs (SHDOADMs) according to the principles of the present invention. As previously described, generally a hitless dynamic OADM can be selectively tuned to remove a wavelength from a WDM signal and add in the same wavelength with different content without effecting any intermediate wavelengths during tuning.

Figure 3a illustrates one embodiment of SHDOADM **300** according to the principles of the present invention. SHDOADM **300** comprises a tunable reflective filter **306,** such as a tunable Bragg grating, on a substrate **308,** a first directive coupler **302,** such as a 3-port optical circulator, a second directive coupler **304,** such as a 3-port optical circulator, and a cross-bar switch **322** on a substrate **324.** Filter **306** has one end connected to the third port **318** of circulator **302** and its other end connected to the first port **320** of circulator **304.** First port **310** of circulator **302** is the In port of SHDOADM **300,** while third port **316** of circulator **304** is the Pass port.

The second port **312** of circulator **302** is connected to the second port **314** of circulator **304** through a bar arm of cross-bar switch **322.** The input side **326** and output side **328** of the other bar arm of cross-bar switch **322** are respectively the Add port and the Drop port of SHDOADM **300.**

During operation, a WDM signal comprising a plurality of channels (e.g., channel A, B, C and D) is input via the In port **310.** Circulator **302** outputs this signal via its third port **318** to filter **306.** Filter **306** reflects the channel to which it is tuned (e.g., channel A) back to circulator **302,** while allowing the rest of the channels (e.g., B, C and D) to pass through. The channels that are passed through are input to circulator **304** via its first port **320** and exit out of Pass port **304.**

Circulator **302** outputs the reflected channel to cross-bar switch **322** via its second port **312.** When filter **306** is not being tuned, cross-bar switch **322** is operated in the cross state causing the reflected channel to be dropped. The reflected channel is dropped because operation of cross-bar switch **322** in the cross state directs the reflected channel to Drop port **328.** Further, when filter **306** is not being tuned, the same channel with different content (e.g., A') can be added by inputting it into Add port **326.** The added channel is directed by cross-bar switch **322** to the second port **314** of circulator **304.** Circulator **304** directs the added channel out its first port **320** to filter **306.** Because the added channel is the same one that filter **306** is tuned to, filter **306** reflects it back to the first port **320** of circulator **304.** Circulator **304** then outputs it out Pass port **316** such that a WDM signal comprising the passed through channels and the added channel (e.g., channels A', B, C and D) is output via Pass port **316.**

When tunable filter **306** is being tuned between a source channel (e.g., channel A) and a destination channel (e.g., channel D), the adding and dropping is deactivated to avoid dropping intermediate channels (e.g., channels B and C) by switching cross-bar switch **322** to the bar state. By placing cross-bar switch **322** into the bar state, a reflected channel is directed to the second port **314** of circulator **304** rather than Drop port **328**. As such, the intermediate channels (e.g., B and C) that are reflected by filter **306** while it is being tuned from one channel to the other are added back into the signal that is output via Pass port **316.** This permits the output signal to contain all of the channels (e.g., A, B, C and D) during tuning, i.e. no intermediate channels are dropped during tuning of SHDOADM **300** from operation on one channel to another.

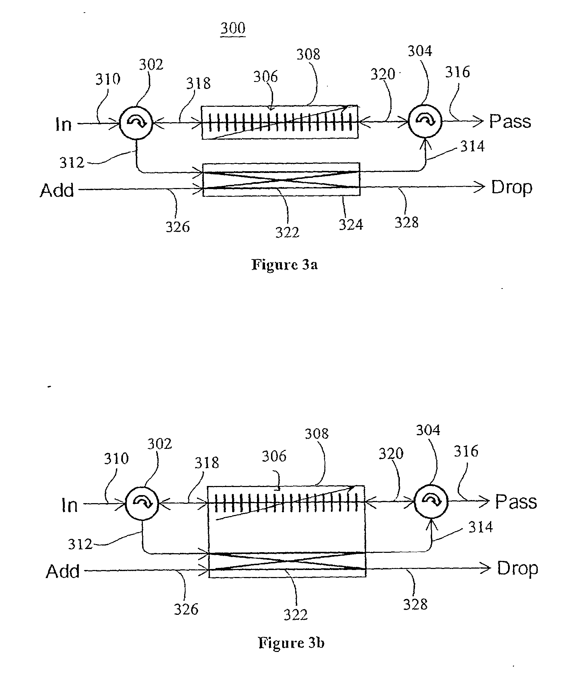

Another embodiment of SHDOADM **300** is illustrated in figure 3b. SHDOADM **300** is the same except the tunable reflective filter 306 and the cross-bar switch 322 are integrated on the same substrate **308.**

Another embodiment of SHDOADM **300** is illustrated in figure 3c. SHDOADM **300** is the same except the tunable reflective filter **306,** cross-bar switch **322,** and optical circulators **302** and **304** are integrated on the same substrate **308.**

Another embodiment of a SHDOADM **400** is illustrated in figure 4a. SHDOADM **400** is similar to SHDOADM **300,** except the tunable reflective filter is two optical paths with Bragg gratings formed across them **406** and the two directive couplers are 3dB couplers **402** and **404** (e.g., MZI coupler, Multimode Interference Coupler, Directional Coupler). The two optical paths with Bragg gratings formed across them **406** and 3dB couplers **402** and **404** form a balanced MZI structure with substantially identical Bragg gratings in the two MZI arms, i.e. the two optical paths. While preferably formed as a single filter that spans both arms, as one of skill in the art would recognize, the individual Bragg gratings can be formed separately in each arm.

SHDOADM **400** operates similarly to SHDOADM **300.** A WDM signal comprising a plurality of channels (e.g., channel A, B, C and D) is input via the In port of SHDOADM **400,** i.e. first input **410** of coupler **402**. Coupler **402** splits the input power of the WDM signal evenly into the two MZI arms. The Bragg gratings in the two MZI arms reflect the channel to which they are tuned (e.g., channel A) back into coupler **402**, while allowing the rest of the channels (e.g.. B. C and D) to be transmitted through. The optical signal carrying the transmitted channels merges in second coupler **404.** When the optical paths are balanced, the optical signal of the transmitted channels is transferred to a first port **416** of second coupler **404** (i.e., the Pass port), with little signal being transmitted to a second port **414** of second coupler **404.** Similarly, the optical signal of the reflected channels merges in first coupler **402.** Like the transmitted channels, the optical signal of the reflected channel is carried out a second port **412** of first coupler **402** with little leakage to first port **410** of first coupler **402.**

Similar to SHDOADM **300,** when the filter **406** is not being tuned, cross-bar switch **422** is operated in the cross state causing the reflected channel to be dropped. The reflected channel is dropped because operation of cross-bar switch **422** in the cross state directs the reflected channel to drop port **428.** Further, when filter **406** is not being tuned, the same channel with different content (e.g., A') can be added by inputting it into Add port **426.** The added channel is directed by cross-bar switch **422** to the second port **414** of coupler **404.** Coupler **404** splits the input power of the added channel evenly into the two MZ arms. The Bragg gratings in the two MZ arms reflect the added channel back into coupler **404.** The optical signal of the add channel is transferred to first port **416** of second coupler **404** such that a WDM signal comprising the passed through channels and the added channel (e.g., channels A', B, C and D) is output via Pass port **416.**

When filter **406** is being tuned between a source channel (e.g., channel A) and a destination channel (e.g., channel D), the adding and dropping is deactivated to avoid dropping intermediate channels (e.g., channels B and C) by switching cross-bar switch **422** to the bar state. By placing cross-bar switch **422** into the bar state, a reflected channel is directed to the second port **414** of coupler **404** rather than drop port **428.** As such, the intermediate channels (e.g., B and C) that are reflected while the filter **406** is being tuned are added back into the signal that is output. This permits the output signal to contain all of the channels (e.g., A, B, C and D) during tuning, i.e. no intermediate channels are dropped during tuning of SHDOADM **400** from operation on one channel to another

Figure 4b illustrates another embodiment of a SHDOADM **400.** SHDOADM **400** is the same except reflective filters **430a** and **430b** replace the 180° bends used to connect the second port **414** of coupler **404** to cross-bar switch **422** and to connect the second port **412** of coupler **402** to cross-bar switch **422.**

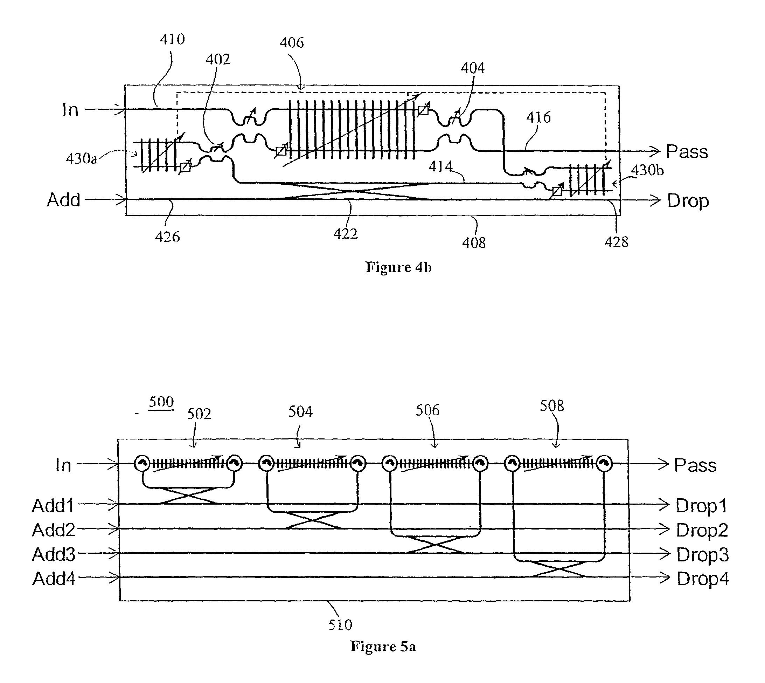

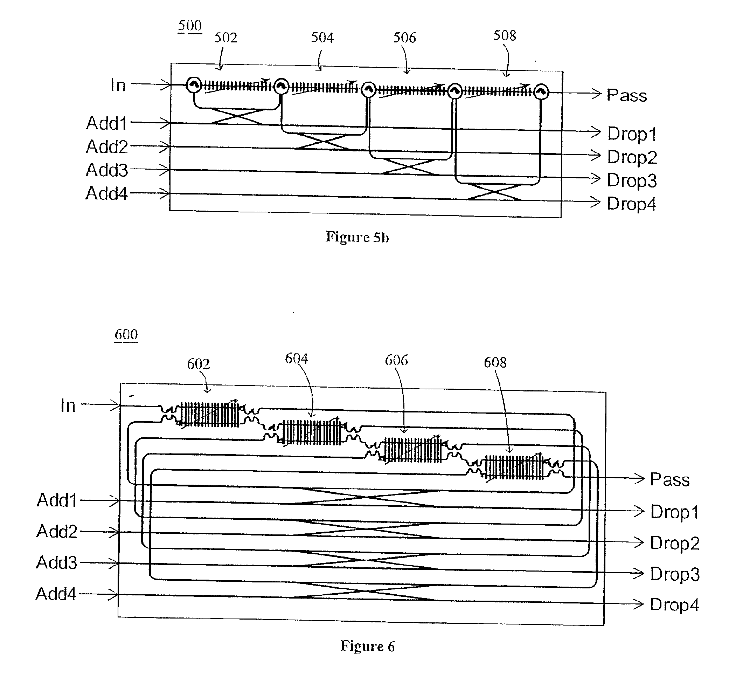

Figures 5a-b and 6 illustrate multi-channel hitless dynamic optical add/drop multiplexers formed by a cascade of SHDOADMs according to the present invention. Generally a multi-channel HDOADM selectively removes more than one wavelength from a WDM signal and selectively adds in more than one of the same wavelengths with different content.

Figure 5a illustrates one embodiment of an exemplary four-channel HDOADM **500** formed by a cascade of SHDOADMs according to the present invention. Four-channel HDOADM is formed by a cascade of SHDOADMs **502, 504, 506** and **508.** SHDOADMs **502, 504, 506** and **508** are single-channel HDOADMs according to any of the embodiments of figure 3a-c. Each of SHDOADMs **502, 504, 506** and **508** is tuned to operate on a different channel. When a SHDOADM is not being tuned and channels are to be add/dropped, its cross-bar switch is set to the cross state. This causes the SHDOADM to drop the input channel to which it is tuned and allows the same channel with different content to be added, as previously described in conjunction with figure 3a. The channels to which it is not tuned and the added channel are transmitted through to the next SHDO ADM of the cascade. In contrast, when a SHDOADM is being tuned, or channels are not to be add/dropped, the cross bar switch of the SHDOADM is set to the bar state. This results in all of the channels being passed to the next SHDOADM in the cascade.

For example, a WDM signal comprising channels A, B, C, D, and E are input via the In port of four-channel HDOADM **500.** SHDOADM **502** is tuned to channel A, SHDOADM **504** is tuned to channel B, SHDOADM **506** is tuned to channel C and SHDOADM **508** is tuned to channel D. It is desired to drop channel A in the input WDM signal, while keeping the B, C, D and E channels. To accomplish this, the cross-bar switch of SHDOADM **502** is placed in the cross state, while the cross-bar switches of the other SHDOADMs are placed in the bar state. As a result, channel A is dropped and is output via the Drop1 port, while channels B, C, D and E are output via the Pass port. When the same channel with different content, A', is to be added, it is input via the Add1 port. SHDOADM **502** then adds channel A' and the signal output via the Pass port contains A', B, C, D and E.

Further, in the case that SHDOADM **502** is to be re-tuned, for example, to channel E, the add/drop function is deactivated by switching the corresponding cross-bar switch of SHDOADM **502** to the bar state. As described above, this prevents SHDOADM **502** from dropping the intermediate channels B, C and D while it is being tuned from operating on channel A to channel E.

Figure 5b illustrates another embodiment of an exemplary four-channel HDOADM **500.** HDOADM **500** is the same except that a 4-port circulator replaces the dual 3-port circulators at the intermediate connections between SHDOADMs **502, 504, 506,** and **508.**

Figure 6 illustrates another embodiment of an exemplary four-channel HDOADM **600** formed by a cascade of SHDOADMs according to the present invention. HDOADM 600 is a four-channel HDOADM and is the same as multi-channel HDOADM **500** except that SHDOADMs **602, 604, 606** and **608** are MZI-based SHDOADMs as described in figure 4a.

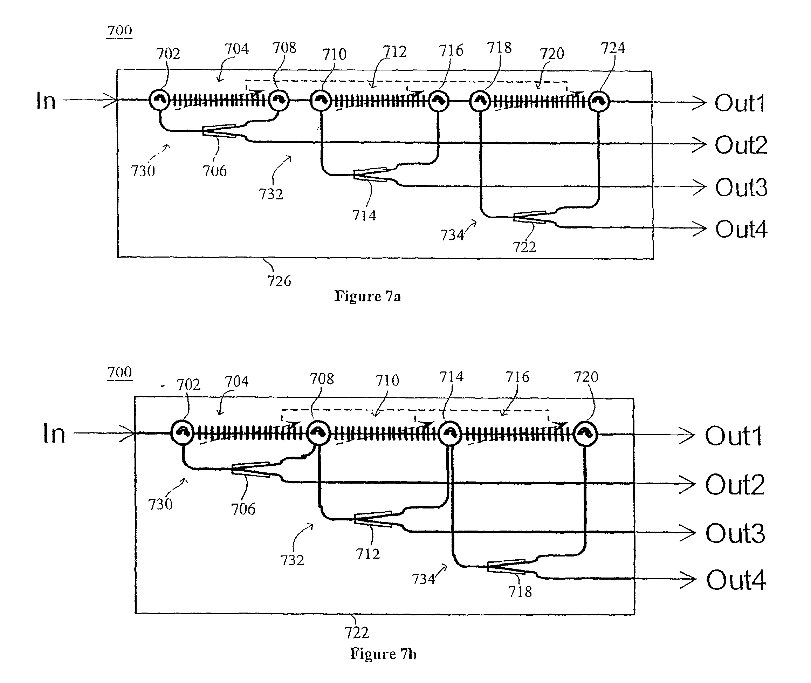

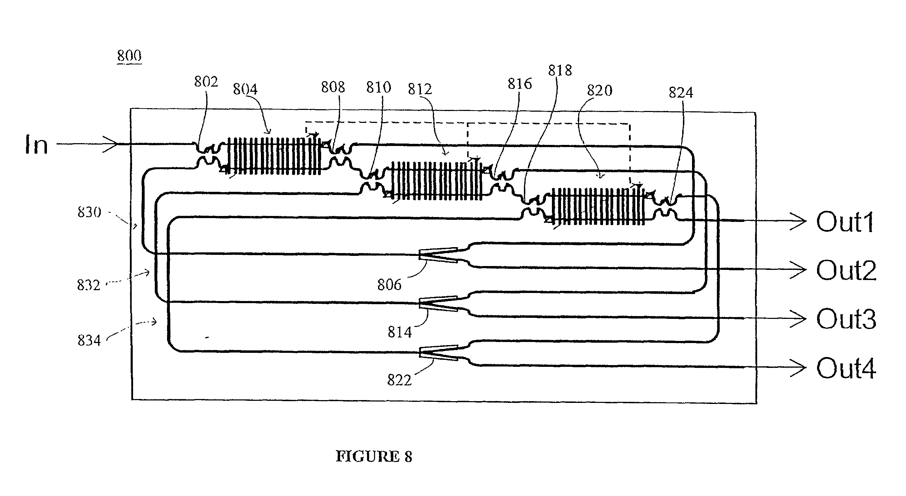

Figures 7a-b and 8 illustrate hitless dynamic demultiplexers (HDDEMUXs) according to the present invention. As previously described, generally a DEMUX divides a WDM signal received from a waveguide into its different channels and couples each channel into a different waveguide.

The filters of the device do not have to be tunable since, generally, a DEMUX separates out all of the channels in a system. However, a hitless dynamic DEMUX according to the principles of the present invention is advantageous as it can be used in systems that have the same channel number and channel spacing but varying channel allocations.

In general, an N-channel HDDEMUX according to the principles of the present invention is formed using N-1 tunable reflective filters, such as tunable Bragg gratings, N-1 1x2 switches, and 2(N-1) directive couplers, such as 3-port circulators. During operation, the N-channel HDDEMUX receives a WDM signal that comprises at least the N channels on which the HDDEMUX is designed to operate and divides the N channels into different signals that are each coupled to a waveguide.

Figure 7a illustrates an exemplary four-channel HDDEMUX **700** according to the principles of the present invention. As shown, exemplary HDDEMUX **700** is a four-channel HDDEMUX and, consequently, during operation it receives, via the In port, a WDM signal that comprises the four channels on which it is designed to operate (e.g., channels A, B, C and D). HDDEMUX **700** then divides each of the 4 channels on which it is designed to operate into four different signals and outputs each one on a separate one of the outputs Out1, Out2, Out3 and Out4 (e.g., channel A is output via Out1, channel B is output via Out2, channel C is output via Out3 and channel D is output via Out4).

Because HDDEMUX **700** is a 4-channel HDDEMUX, it comprises 3 tunable reflective filters **704, 712** and **720,** 3 1x2 switches **706, 714** and **722,** and 6 3-port circulators **702, 708, 710, 716, 718** and **724.** Circulators **702** and **708,** tunable reflective filter **704** and 1×2 switch **706** are arranged in a fashion similar to HDOADM 300 to form a first hitless optical divide module (HODM) **730.** HODM **730** operates similar to HDOADM **300.** Circulator **702** directs an input signal to reflective filter **704** and reflective filter **704** reflects a channel to which it is tuned back to circulator **702,** which then directs the reflected signal to switch **706.** When switch **706** is in a first position, the reflected channel is directed out the port Out2. When switch **706** is in the other position, the reflected channel is directed towards circulator **708,** which recombines it with the transmitted channels and outputs the WDM signal such that no channels are divided out.

Similarly, circulators **710** and **716,** tunable reflective filter **712** and 1x2 switch **714** are arranged to form second HODM **732** which is cascaded with HODM **730** and circulators **718** and **724,** tunable reflective filter **720** and 1x2 switch **722** are arranged to form a third HODM **734** which is cascaded with HODM **732.** HODM **730** divides out the channel on which it operates (e.g., channel B) and outputs it via the port Out2. HODM **732** divides out the channel on which it operates (e.g., channel C) and outputs it via the port Out3. HODM **734** divides out the channel on which it operates (e.g.. channel D) and outputs it via the port Out4. The remaining channel (e.g., channel A) is output via the port Out1.

Figure 7b illustrates another embodiment of a HDDEMUX 700 in which the intermediate 3-port circulators are replaced with 4-port circulators **708** and **714.** Thus, in this embodiment, a single 4-port circulator acts as two directive couplers to provide the 2(N-1) directive couplers.

In another embodiment of an N-ehannel HDDEMUX according to the principles of the present invention, the N-1 tunable reflective filters are MZI-based reflective filters and the 2(N-1) directive couplers are 3dB couplers. Thus, in this embodiment, N-1 MZI-based reflective filters, 2(N-1) 3dB couplers and N-1 1x2 switches are used for an N-channel HDDEMUX. Similar to the embodiment of figure 1, the couplers, reflective filters and 1x2 switches are arranged to form cascaded HODMs.

An exemplary 4-channel HDDEMUX **800** according to this embodiment is illustrated in figure 8. Couplers **802** and **808,** reflective filter **804** and 1x2 switch **806** are arranged to form a first HODM **830.** Couplers **810** and **816,** reflective filter 812 and 1x2 switch 814 are arranged to form a second HODM 832, which is cascaded with HODM 830. Couplers 818 and 824, reflective filter **820** and 1x2 switch **822** are arranged to form a third HODM **834,** which is cascaded with HODM 832. Each HODM 830, 832 and 834 operates in a like manner to the HODMs of the embodiment of figure 7a to divide out the channel it is set to operate on from the input WDM signal. As such, 4-channel HDDEMUX **800** functions in the same fashion as 4-channel HDDEMUX **100** to demultiplex 4 channels in a WDM signal.

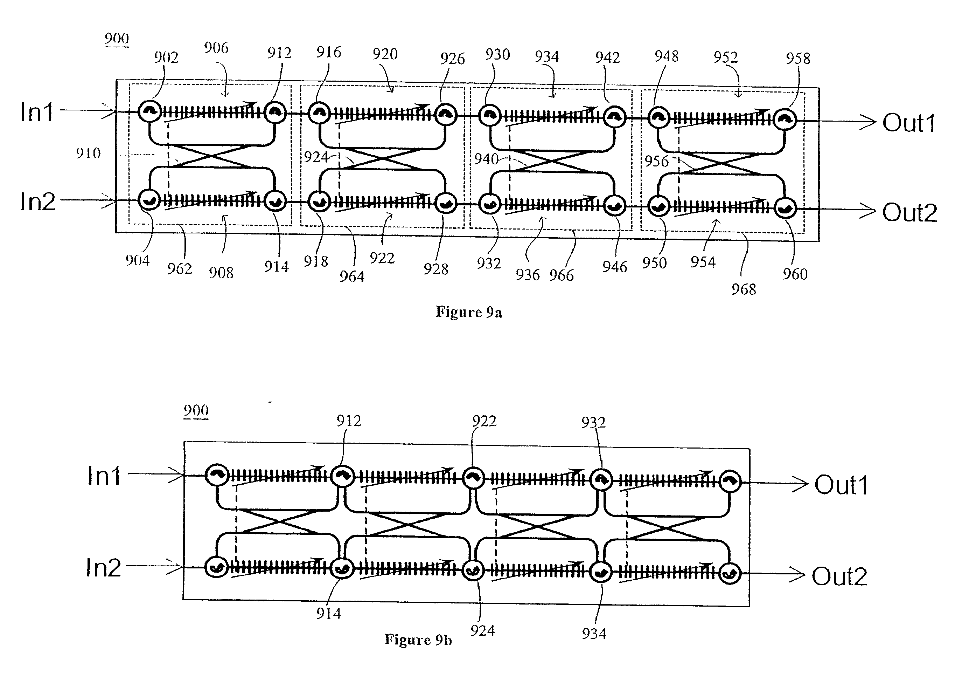

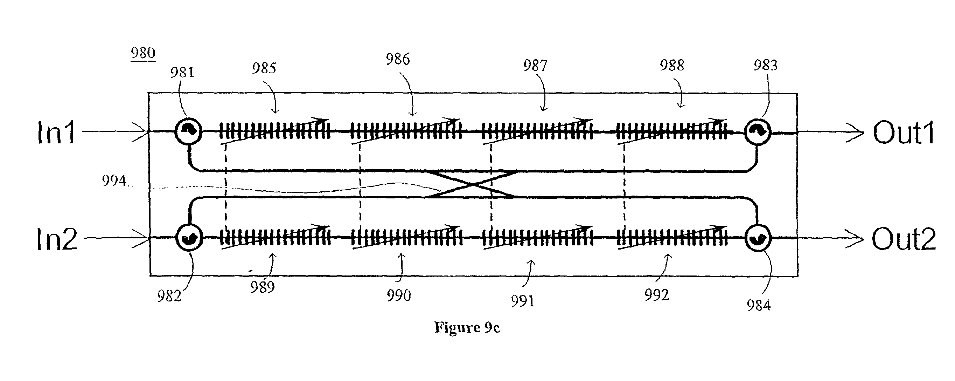

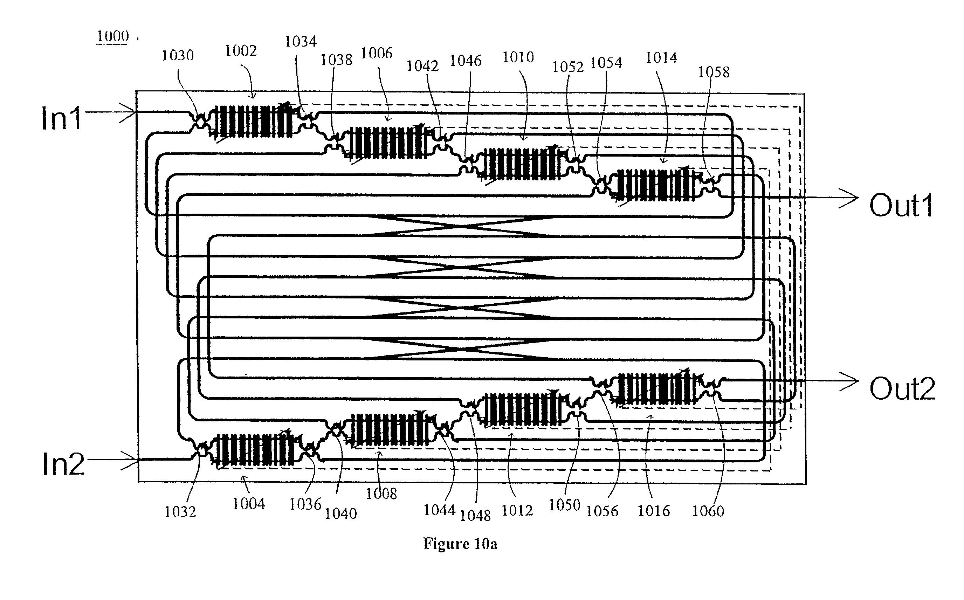

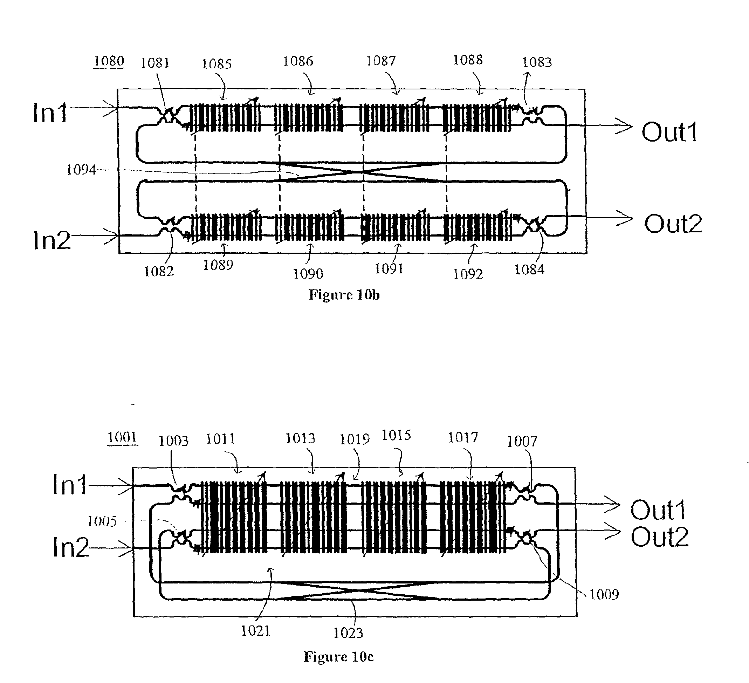

Figures 9a-9c and 10a-10c illustrate M-channel Hitless Dynamic WSSs (HDWSSs) according to the principles of the present invention. As previously described, a WSS provides for selectively switching amongst L WDM signals that have N channels, the contents of any M of the N channels. For example, two WDM signals. WDM₁ and WDM₂ have N channels each, including channels A and A', respectively. Channels A and A' are the same wavelength in both WDM signals, i.e. they are the same channel, but with different content. A WSS provides for one of two possibilities with respect to channels A and A': (a) the channels are not switched between the WDM signals, such that WDM₁ continues to have the content of A and WDM₂ continues to have the content of A' (b) the channels are switched between the WDM signals such that WDM₁ has the content of A' and WDM₂ has the content of A. The same occurs for M-1 more channels.

One embodiment of a HDWSS according to the principles of the present invention uses M tunable reflective filters, such as tunable Bragg gratings, per each one of the L WDM signals, M pairs of directive couplers, such as 3-port optical circulators, per each one of the L WDM signals, and M L×L switches. Figure 9a illustrates an exemplary HDWSS **900** of this embodiment that switches amongst two WDM signals that have N channels, the contents of any four of the N channels. Consequently, HDWSS **900** comprises 4 tunable reflective filters 906, **920, 934** and **952** for the first WDM signal input via port In1 and 4 tunable reflective filters **908, 922, 936** and **954** for the second WDM signal input via port In2. WSS **900** also comprises 8 3-port circulators **902**, **912, 916, 926, 930, 942, 948** and **958** for the first WDM signal, 8 3-port circulators **904, 914, 918, 928, 932, 944, 950** and **960** for the second WDM signal and 4 2x2 switches **910, 924, 940** and **956.**

For M-channel HDWSSs of this embodiment, M wavelength switches are formed from the circulators, reflective filters and switches; one for each of the wavelengths in the subset to be switched. These wavelength switches are then placed in cascade. As shown, for four-channel HDWSS **900,** there are four wavelength switches **962, 964, 966** and **968** formed from the circulators, filters and switches.

For instance, wavelength switch **962** is formed from tunable reflective filters **906** and **908,** 3-port circulators **902, 912, 904** and **912,** and 2x2 switch **910.** Reflective filter **906** has one of its ends connected to the third port of 3-port circulator **902** and its other end connected to first port of 3-port circulator **912.** One of the bar arms of switch **910** is connected between the second ports of circulators **902** and **912.** The other bar arm of switch **910** is connected between the second ports of circulators **904** and **914.** Reflective filter **908** has one end connected to the third port of circulator **904** and its other end connected to the first port of circulator 914. Reflective filter **908** and **906** are tuned to the same wavelength.

Circulator **902** and reflective filter **906** operates in the same manner as HDOADM **300** to direct the reflected channel that reflective filter **906** is tuned to towards switch **910.** When switch **910** is in the bar state, the reflected channel is directed by switch **910** to circulator **912,** resulting in it being output with the channels transmitted by reflective filter **906.** Correspondingly, the channel reflected by reflective filter **908** is directed by switch **910** to circulator **914,** resulting in it being output with the channels transmitted by reflective filter **914**.

When switch **910** is in the cross-state, however, the channel reflected by filter **906** is instead directed towards circulator **914,** which results in the reflected channel being output with the channels transmitted by reflective filter **908.** Correspondingly, the channel reflected by reflective filter **908** is output with the channels transmitted by reflective filter **906**.

Therefore, wavelength switch **962** is operative to switch the contents of a channel between two WDM signals. Each of the additional wavelength switches **966, 966** and **968** are formed in a like manner, however, are tuned to a different one of the four channels. Thus, by cascading each of the wavelength switches, the contents of any four out of the N channels carried by the WDM signals input into the In1 port and the In2 port can be switched between the WDM signals. If less than four channels need to be switched, one or more of the wavelength switches are effectively turned off by tuning them so that they filter either between channels or outside the frequency band used (e.g., outside the erbium "C" band).

Tuning the tunable reflective filters of the wavelength switches tunes HDWSS **900** to operate on different channels. Preferably, the tunable filters of a wavelength switch can be tuned simultaneously (indicated by the dashed lines linking the arrows). Further, placing a wavelength switch's corresponding switch in the bar-state operates HDWSS 900 in a hitless manner when that wavelength switch is tuned.

Figure 9b illustrates another embodiment of a HDWSS **900** except that the intermediate 3-port circulators are replaced with 4-port circulators **912, 922, 932, 914, 924** and **934.** Thus, in this embodiment, a HDWSS according to the principles of the present invention is formed using M tunable reflective filters per each one of the L WDM signals, 2 3-port directive couplers, such as 3-port optical circulators, per each one of the L WDM signals, M-1 4-port directive couplers, such as 4-port optical circulators, per each one of the L WDM signals, and M L×L switches.

In another embodiment, a HDWSS according to the principles of the present invention is formed using M tunable reflective filters per WDM signal, 2 directive couplers, such as 3-port optical circulators, per WDM signal, and one LxL switch. Figure 9c illustrates an exemplary HDWSS 900 of this embodiment that switches amongst two WDM signals that have N channels, the contents of four of the N channels. As shown, four tunable reflective filters **906, 986, 987** and **988** are cascaded between a third port of 3-port circulator **981** and a first port of 3-port circulator **983.** One of the bar arms of switch **994** is connected between the second ports of circulators **981** and **983.** The other bar arm of switch **928** is connected between the second ports of circulators **982** and **984.** Four tunable reflective filters **989, 990, 991** and **992** are cascaded between a third port of 3-port circulator **982** and a first port of a 3-port circulator **984.** Reflective filter **985** and **989** are tuned to the same channel. Reflective filter **986** and **990** are tuned to the same channel. Reflective filter **987** and **991** are tuned to the same channel. Reflective filter **988** and **992** are tuned to the same channel.

Each of the reflective filters **985, 986, 987** and **988** operate to reflect their respective channel back to circulator **981.** Circulator **981** then directs the reflected channels towards switch **994.** When switch **994** is in the bar state, the reflected channels are directed by switch **994** to circulator **983,** resulting in it being output with the channels transmitted by reflective filters **985, 986, 987** and **988.** Correspondingly, the channels reflected by reflective filters **989, 990, 991** and **992** are directed by switch **994** to circulator **984,** resulting in them being output with the channels transmitted by reflective filters **989, 990. 991** and **992.**

When switch **994** is in the cross-state, however, the channels reflected by filters **985, 986, 987** and **988** are instead directed towards circulator **984,** which results in the reflected channels being output with the channels transmitted by reflective filters **989, 990**, **991** and **992.** Correspondingly, the channels reflected by reflective filters **989, 990, 991** and **992** are output with the channels transmitted by reflective filters **985, 986, 987** and **988.**

Therefore, when switch **994** is in the cross-state, HDWSS **900** operates to switch the contents of four of the N channels carried by the WDM signals input into the In1 port and the In2 port between the WDM signals. If less than four channels need to be switched, one or more of the sets of filters tuned to the same channel are effectively turned off by tuning them so that they filter either between channels or outside the frequency band used (e.g., outside the erbium "C" band).

Tuning the reflective filters tunes HDWSS **900** to operate on different channels. Preferably, each one of the tunable filters that are tuned to the same channel (e.g., filters 906 and **908)** can be tuned simultaneously (indicated by the dashed lines linking the arrows). Further, placing switch **928** into the bar-state operates HDWSS **900** in a hitless manner when any of the reflective filters is tuned.

In another embodiment, a HDWSS according to the principles of the present invention is formed using a cascade of M balanced MZI structures per WDM signal and M L×L switches. Figure 10a illustrates an exemplary HDWSS **1000** of this embodiment that switches amongst two WDM signals that have N channels, the contents of any four of the N channels. As can be seen, this embodiment is similar to the embodiment of figure 9a, except the tunable reflective filters **1002, 1006, 1010, 1014, 1004, 1008, 1012** and **1016** are MZI-based reflective filters, i.e. two optical paths with Bragg gratings formed across them, and the directive couplers 1030-1060 are 3dB couplers. Consequently, HDWSS **1000** operates in the same manner as HDWSS **900.**

In another embodiment. a WSS is formed using M cascaded MZI-based filters per WDM signal. 2 3dB couplers per WDM signal, and one LxL switch. Figure 10b illustrates an exemplary HDWSS **1080** of this embodiment that switches amongst two WDM signals that have N channels, the contents of four of the N channels. As can be seen, this embodiment is similar to the embodiment of figure 9c, except the tunable reflective filters **1085-1092** are MZI-based reflective filters, i.e. two optical paths with Bragg gratings formed across them, and the directive couplers are 3dB couplers. Consequently, HDWSS **1000** operates in the same manner as HDWSS **980.**

In another embodiment, a HDWSS is formed using M cascaded MZI-based filters per WDM signal, 2 3dB couplers per WDM signal, and one LxL switch, however, the M MZI-based reflective filters are built for all of the WDM signals by forming a single set of tunable Bragg gratings across all of the MZI arms. Figure 10c illustrates an exemplary HDWSS **1001** of this embodiment that switches amongst two WDM signals that have N channels, the contents of four of the N channels. As can be seen, a first MZI structure (arms **1019** and 3dB couplers **1003** and **1007**) for the first WDM signal is formed alongside a second MZI structure (arms **1021** and 3dB couplers **1005** and **1009**) for the second WDM signal. A single set of four tunable Bragg gratings **1011-1017** are formed across arms **1019** and **1021** to form the four tunable MZI-based filters for the first WDM signal and the four tunable MZI-based filters for the second WDM signal. A 2x2 switch **1023** is connected between the MZI structures in the same manner as switch **1094** of the embodiment of figure 9c. HDWSS **1001,** thus, operates in the same manner as the embodiment of figures 10b, however, the use of a single set of gratings provides for synchronicity and easier control when tuning the filters.

The embodiments of figure 9a-b and figure 10a are advantageous in that each filter can be tuned separately without having to bar the switching of the other filters during tuning. Between the embodiments of figure 9a and figure 9b, the advantage of the figure 9a embodiment is that it uses only 3-port circulators, which might be easier to produce than 4-port circulators, and the advantage of the figure 9b embodiment is that it uses fewer circulators, which is an advantage when 4-port circulators can be easily produced. The advantage of the figure 9c embodiment is that it uses even fewer circulators than the embodiments of figures 9a and 9b, but whenever one filter is being tuned, all the filters must be barred (i.e., no switching).

An OXC provides for selectively switching amongst L WDM signals that have N channels, the contents of any or all of the N channels. Therefore, any of the HDWSS embodiments above can be used as an OXC by making M equal to N.

When used as an OXC, the filters of the device do not have to be tunable since, by definition, the content of all the channels in the system can be switched. However, it is preferable that the filters are tunable so that the OXC can be used in different systems that have the same channel number and channel spacing but different channel allocations. In this case, the tuning elements would typically be set initially for filtering at a specific channel allocation, with no subsequent tuning needed in the system. Since the spacing between the channels remains constant, it is preferable that all the filters are tunable simultaneously, allowing for simpler electronic control of the device. However, it should be noted, that having independent tuning elements might be advantageous as it allows for individual trimming of the filters to compensate for individual characteristics possibly due to fabrication imperfections.

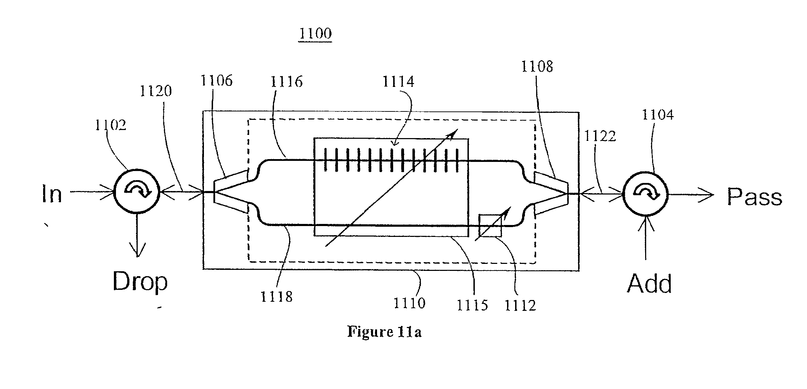

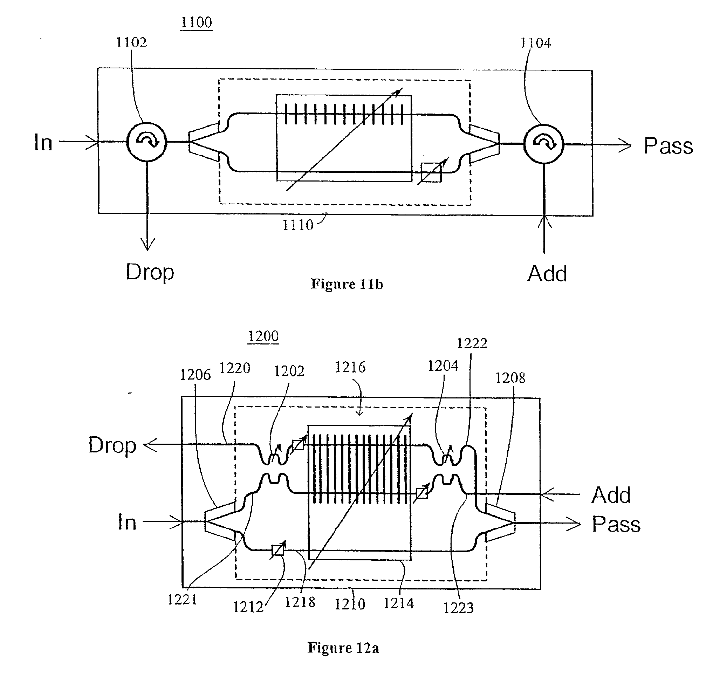

Figures 11a-b and 12a-b illustrate single-channel errorless hitless dynamic optical add/drop multiplexers (EHDOADMs). A hitless dynamic optical add/drop multiplexer is called errorless when the intermediate channels do not experience any significant change in the BER during tuning.

To exemplify this, while the embodiments of figures 3a-c and 4a-b are hitless dynamic OADMs, they are not errorless at high modulation speeds because, during the short time when the filter's edge is going through the signal spike of a channel, part of the signal goes straight through the filter to the pass port and part of the signal is dropped/added then goes through the pass port. When the modulation speed is low enough, the two segments of the signal rejoin relatively in sync, causing some broadening that affects the SNR (signal-to-noise ratio) and the duty cycle. When the modulation speed is high, the delayed segment of the signal joins the straight-through segment with a large delay, causing the delayed part of a bit to join a non-corresponding bit on the straight-through path, which typically (a) lowers the SNR when the reflected segment is weaker than the straight-through segment, (b) destroys the signal when the reflected segment and the straight-through segment have competing intensities, or (c) causes bit sequence destruction when the reflected segment is stronger than the straight-through segment. All of these effects result in a poorer BER (bit error rate) during the short time when the filter edge is going through the signal spike of a channel. Also, because the cross-bar switches do not switch instantaneously, errors result during the switching performed for tuning.

It is desirable to have an errorless hitless dynamic OADM, i.e. one in which none of the intermediate channels experiences any significant change in the BER during tuning. This effect is achieved by having a bypass path for the entire WDM signal and establishing a balanced MZI during the time when switching is occurring between the filter path and the bypass path.

One embodiment which achieves this functionality is illustrated in figure 11a. In this embodiment, a EHDOADM **1100** comprises two 3-port optical circulators **1102** and **1104,** two opposed 1×2 switches **1106** and **1108**, with the 2-port sides facing, and a filter path **1116** and bypass path **1118.** connected between switches **1108** and **1106.** A port **1120** of circulator **1102** is connected to the single-port side of switch **1106.** Likewise, a port **1122** of circulator **1104** is connected to the single-port side of switch **1108.** Filter path **1114** comprises a tunable reflective filter **1114,** such as a Bragg grating, which is tuned by an appropriate means, such as heater **1115.** Bypass path **1118** is simultaneously tuned by heater **1114.** A phase shifter **1112** is used to trim path **1118** so that a balanced MZI configuration is maintained. In the embodiment of figure 11a, all of the components except for circulators **1104** and **1102** are integrated on a single substrate **1110.**

During operation, a WDM signal comprising a plurality of channels (e.g., channel A, B, C and D) is input to circulator **1102** via the In port. This WDM signal is output to switch **1106** by port **1120.** When channels are being added and/or dropped, switches **1106** and **1108** are set so that the signals travel along filter path **1116.** The WDM signal, therefore, follows this path. Filter **1114** reflects the channel to which it is tuned (e.g., channel A) back to switch **1106,** while allowing the rest of the channels (e.g., B, C and D) to pass through. The channels that are passed through are directed by switch **1108** to circulator **1104** via port **1122.** The passed through channels exit out of the Pass output of circulator **1104.** The reflected channel is directed by switch **1106** back to circulator **1102,** which outputs it via the Drop port.

The same channel as the one dropped with different content (e.g., A') can be added by inputting it into the Add port of circulator **1104.** The added channel is output from circulator **1104** via port **1122** to switch **1108.** Switch **1108** directs the added channel along filter path **1116.** Because the added channel is the same one that filter **1114** is tuned to, filter **1114** reflects it back to through switch **1108** to port **1122** of circulator **1104.** Circulator **1104** then outputs it out the Pass port such that a WDM signal comprising the passed through channels and the added channel (e.g., channels A'. B. C and D) is output by EHDOADM 1100.

When tunable filter **1114** is to be tuned to operate on another channel, switches **1106** and **1108** are switched to direct signals along bypass path **1118.** The arrangement of the two paths **1116** and **1118** and switches **1106** and **1108** establishes a balanced MZI during the time when switching is occurring between the filter path **1116** and the bypass path **1118.** This prevents errors resulting from switching. Further, by directing all of the channels through bypass path **1118** during tuning of filter **1114,** filter **1114** does not operate on any of the channels while it is being tuned, which prevents problems resulting from segments of the WDM signal being delayed relative to the other segments during tuning.

Generally, switches **1106** and **1108** are required to switch substantially simultaneously for proper operation of EHDOADM **1100.** Since there is a need to simultaneously switch switches **1106** and **1108,** corresponding switch electrodes of each switch **1106** and **1108** are preferably connected for synchronicity and/or easier electronic control of the device. This is illustrated by the dashed lines linking the switch electrodes.

A device that is fully integrated on a single chip is less likely to have transient and synchronicity issues. As such, an alternative to the embodiment of figure 11a has the circulators additionally integrated on the same substrate. This is illustrated in figure 11b. As shown, the embodiment of figure 11a is the same as that of figure 11b, except for the integration of circulators **1102** and **1104** on substrate **1110.** Integrated circulators **1102** and **1104** are based, for example, on planar MZIs using either polarization splitting and nonreciprocal polarization conversion, or nonreciprocal phase shift within the interferometric arm.

Another integrated design uses an MZI-based design for the filter path. This is illustrated in figure 12a. EHDOADM **1200** comprises two opposed 1x2 switches **1206** and **1208** having the 2-port sides facing with a filter path **1216** and bypass path **1218** connected therebetween. Filter path **1216** comprises two optical paths with Bragg gratings formed across them **1206** and two **3dB** couplers **1202** and **1204.** This forms a balanced MZI structure with substantially identical Bragg gratings in the two MZI arms. Filter path **1216** is connected between switches **1206** and **1208** by one port of 3dB coupler **1202** connected to switch **1206** and one port of 3dB coupler **1204** connected to switch **1208.** The second port of 3dB coupler **1202** outputs the dropped channel. Similarly, the other port of 3dB coupler **1204** is used as an input port to input add channels. The single-port side of switch **1206** is used as the In port and the single-port side of switch **1208** is the Pass port. The Bragg gratings act as a tunable reflective filter, which is tuned by, for example, heater **1214.** Bypass path **1218** is simultaneously tuned by heater **1214.** Switch electrodes of each switch **1206** and **1208** are preferably connected for synchronicity and/or easier electronic control of the device as they are in EHDOADM **1100.** This is similarly illustrated by the dashed lines linking the switch electrodes.

EHDOADM **1200** operates similarly to EHDOADM **1100.** During operation, a WDM signal comprising a plurality of channels (e.g., channel A, B, C and D) is input via the In port. When channels are being added and/or dropped, switches **1206** and **1208** are set so that the signals travel along filter path **1216.** The WDM signal, therefore, follows this path. As such, the WDM signal input coupler **1202** by switch **1206.** Coupler **1202** splits the input power of the WDM signal evenly into the two MZI arms. The Bragg gratings in the two MZI arms reflect the channel they are tuned to (e.g., channel A) back into coupler **1202,** while allowing the rest of the channels (e.g.. B, C and D) to be transmitted through. The optical signal carrying the transmitted channels merges in second coupler **1204.** When the optical paths are balanced, the optical signal of the transmitted channels is transferred to switch **1208** and are output via the Pass port. The optical signal of the reflected channel merges in first coupler **1202.** Like the transmitted channels, the optical signal of the reflected channel is carried out the Drop port, with little leakage to the port connected to switch **1206.**

The same channel as the one dropped with different content (e.g., A') can be added by inputting it into coupler **1204** by the Add port. Coupler **1204** splits the input power of the added channel evenly into the two MZI arms. The Bragg gratings in the two MZI arms reflect the added channel back into coupler **1204.** The optical signal of the add channel is then transferred by coupler **1204** to switch **1208** such that a WDM signal comprising the passed through channels and the added channel (e.g., channels A', B, C and D) is output via the Pass port.

Like EHDOADM **1100,** when the tunable filter is to be tuned to operate on another channel, switches **1206** and **1208** are switched to direct signals along bypass path **1218.** The arrangement of the two paths **1216** and **1218** and switches **1206** and **1208** also establishes a balanced MZI during the time when switching is occurring between the filter path **1216** and the bypass path **1218,** which prevents errors resulting from switching. Further, by directing all of the channels through bypass path **1218** during tuning likewise prevents problems resulting from segments of the WDM signal being delayed relative to the other segments.

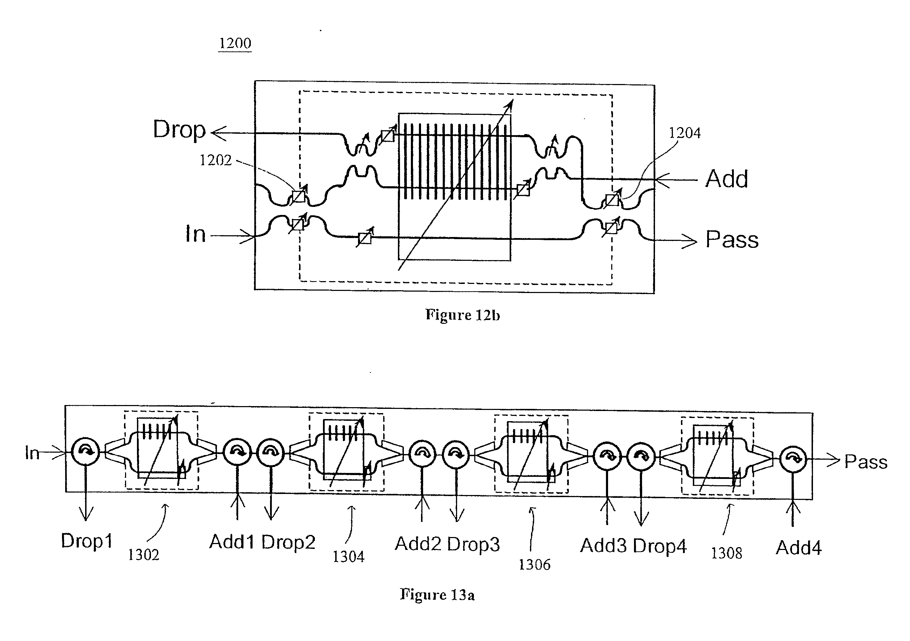

While thermo-optic 1x2 digital optical switches (DOS) have been illustrated, NIMI-based or MZI-based 1x2 switches can also be used. The use of MZI-based 1x2 switches is illustrated in figure 12b. The embodiment of figure 12b is the same, except the 1x2 DOS thermo-optic switches have been replaced by MZI 1x2 switches **1202** and **1204.** MMI-based and MZI-based 1x2 switches can also be used in place of the 1x2 DOS thermo-optic switches in the embodiments of figures 11a-b,

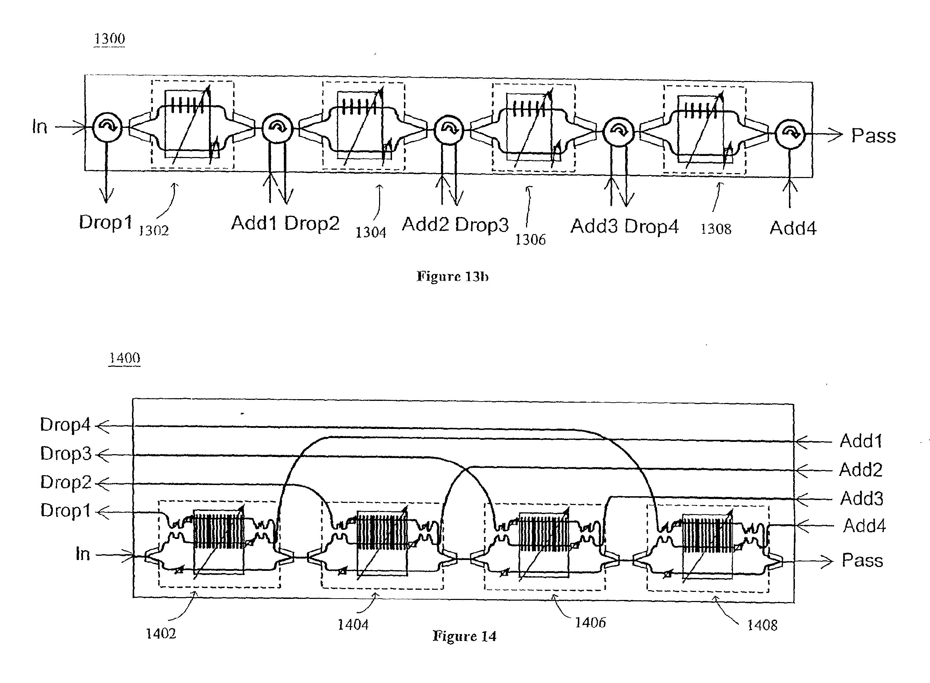

Similar to the multi-channel HDOADM formed from the single channel HDOADMs, multi-channel EHDOADMs can be formed by cascading multiple single-channel EHDOADMs. Figure 13a illustrates one embodiment of an exemplary four-channel HEDOADM 1300 formed using a cascade of single-channel EHDOADMs **1302, 1304, 1306, 1308** according to the embodiment of figure 11a. Each single-channel EHDOADMs **1302, 1304, 1306, 1308** is tuned to operate on a different channel. When a single-channel EHDOADM is not being tuned and channels are to be add/dropped, its switches are set to direct signals along the filter path. This causes the EHDOADM to drop the input channel to which it is tuned and allows the same channel with different content to be added, as previously described in conjunction with figure 11a. The channels to which it is not tuned and the added channel are transmitted through to the next EHDOADM of the cascade. In contrast, when a EHDOADM is being tuned, or channels are not to be add/dropped, the switches are set to direct signals along the bypass path. This results in all of the channels being passed to the next EHDOADM in the cascade.

Figure 13b illustrates another embodiment of exemplary four-channel EHDOADM **1300** formed by a cascade of single-channel EHDOADM according to the embodiment of figure 11b. As shown, a 4-port circulator replaces the dual 3-port circulators at the intermediate connections between each single-channel EHDOADM **1302, 1304, 1306** and **1308.**

Figure 14 illustrates another embodiment of an exemplary four-channel EHDOADM **1400** formed by a cascade of single-channel EHDOADM according to the embodiment of figure 12a. HDOADM **1400** is a four-channel HDOADM and is the same as multi-channel HDOADM **1300** except that single-channel EHDOADM **1402, 1404, 1406** and **1408** are MZI-based EHDOADMs as described in figure 12a.

Polarization independent EHDOADMs can be formed from EHDOADMs according to the present invention. Sometimes, tunable reflective filters operate slightly different on light depending upon the light's polarization state, i.e. they have polarization dependent behavior. Because of this behavior, difficulties can occur when a reflective filter is used to operate on light consisting of more than one polarization state. An EHDOADM that is polarization dependent, however, can be formed using polarization mode splitters/combiners with two EHDOADMs of the present invention. Generally, a polarization splitter is used to split incoming light signals into their two orthogonal components, the transverse electric (TE) and the transverse magnetic (TM) polarizations. Separate EHDOADMs are then used to operate on these two polarized signals. After the EHDOADMs operate on these polarized signals, the signals are recombined by the polarization combiners for output.

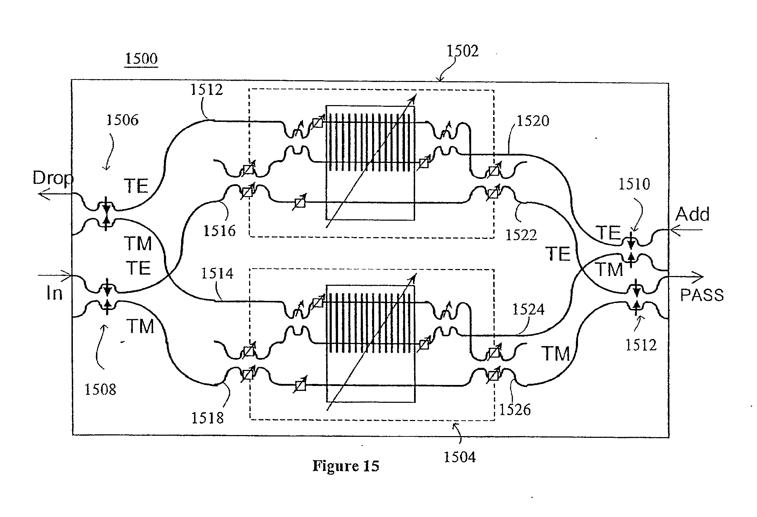

A polarization independent EHDOADM **1500** formed, for example, from two EHDOADMs according to the embodiment of figure 12b is illustrated in figure 15. As illustrated, a polarization splitter **1508** is connected between the input ports of a first EHDOADM **1502** and a second EHDOADM **1504.** As shown, polarization splitter **1508** has one of its outputs connected to the input port **1516** of first EHDOADM **1502** and its other output connected to the input port **1518** of second EHDOADM **1504.** The input port of polarization splitter **1508** is used as the In port of polarization independent EHDOADM **1500.** Similarly, a polarization splitter **1510** is connected between the add ports of first and second EHDOADMs **1502** and **1504.** Polarization splitter **1510** has one of its outputs connected to the add port **1522** of first EHDOADM **1502** and its other output is connected to the add port **1524** of second EHDOADM **1504.** The input port of polarization splitter **1510** is used as the Add port of polarization independent EHDOADM **1500.**

A polarization combiner **1506** is connected between the drop ports of first and second EHDOADMs **1502** and **1504.** As shown, polarization combiner **1506** has one of its inputs connected to the drop port **1512** of first EHDOADM **1502** and its other input connected to the drop port of second EHDOADM **1504.** The output of polarization combiner **1506** is used as the Drop port for polarization independent EHDOADM **1500.** Similarly, a polarization combiner **1512** is connected between the pass ports of first and second EHDOADMs **1502** and **1504.** Polarization combiner **1512** has one of its inputs connected to the pass port **1522** of first EHDOADM **1502** and its other input connected to the pass port of second EHDOADM **1504.** The output of polarization combiner **1512** is used as the Pass port for polarization independent EHDOADM **1500.**

Both EHDOADMs **1502** and **1504** are tuned to operate on the same channel. Thus, when a WDM signal is input the In port of EHDOADM **1500,** it is split into two orthogonally polarized signals carrying the channels. One polarized signal is input to first EHDOADM **1502** via port **1516,** while the other polarized signal is input to second EHDOADM **1504** via port **1518.** Each EHDOADM **1502** and **1504** operates on its respective signal. When EHDOADMs **1502** and **1504** are not being tuned and channels are to be add/dropped, each EHDOADM's switches are set so that signals are directed signals along the filter path. Each EHDOADM **1502** and **1504** drops the tuned input channel from its polarized signal. First EHDOADM **1502** drops the tuned input channel via port **1512** and second EHDOADM drops the tuned input channel via port **1518.** Polarization combiner combines the signals carrying the dropped channel and outputs it via the Drop port. The channels to which EHDOADMs **1502** and **1504** are not tuned are transmitted through to polarization combiner **1512,** which combines the signals carrying these channels, and outputs them via the Pass port.

An add channel is input the Add port and split into two orthogonally polarized signals by polarization splitter **1510.** Each polarized signal is input into a EHDOADM and reflected back to polarization combiner **1512.** The two polarized signals containing the add channel are combined and output via the Pass port.

When the EHDOADMs **1502** and **1504** are being tuned, or channels are not to be add/dropped, the switches are set to direct signals along the bypass path. This results in all of the channels being passed from the In port to the Pass port.

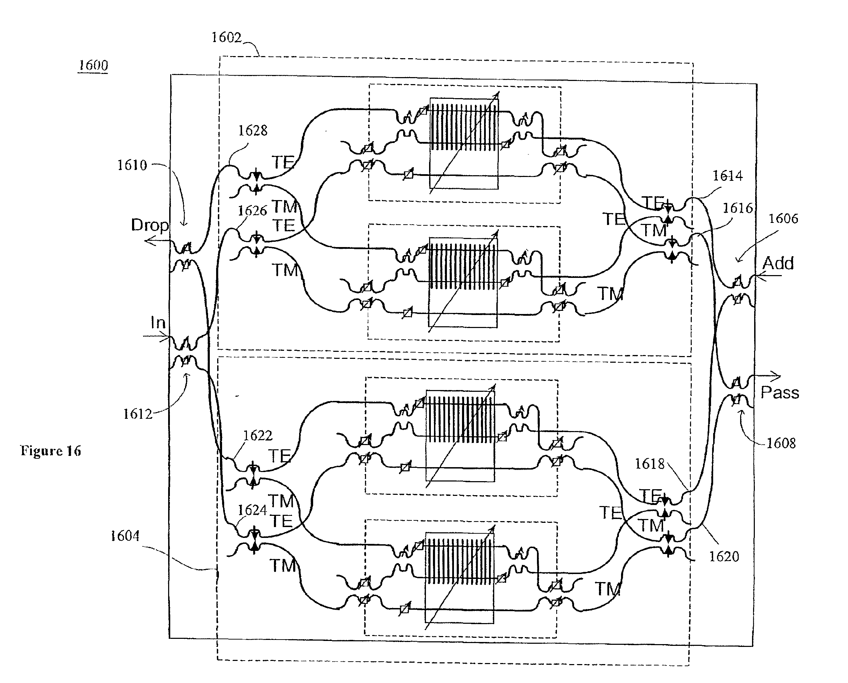

Figure 16 illustrates a multi-stage polarization independent EHDOADM **1600.** At times, tunable reflective filters only have a dynamic range over a portion of the spectrum of the WDM signal. For instance, some tunable reflective filters only have a dynamic range over half of the Erbium C band. By using 1x2 switches and multiple EHDOADMs, a multi-stage polarization independent EHDOADM **1600** that operates over the entire Erbium C band can be formed. As shown, a first EHDOADM **1602** has its add port **1614** connected to one port of the two-port side of 1x2 switch **1606.** A second EHDOADM **1604** has its add port **1618** connected to the other port of the two-port side of switch **1606.** The port on the one-port side of switch 1606 is then used as the Add port for the multi-stage EHDOADM **1600.** Similarly, 1x2 switch **1608** is connected to the pass ports **1616** and **1620.** switch **1610** is connected to drop ports **1622** and **1628.** and switch **1612** is connected to in ports **1624** and **1626.** EHDOADMs **1602** and **1604** operate as described in conjunction with figure 15. Signals over one half of the spectrum are routed by 1x2 switches **1606, 1608, 1610,** and **1612** so as to be operated on by first EHDOADM **1602,** while the other half is routed by the 1x2 switches **1606, 1608, 1610,** and **1612** so as to be operated on by second EHDOADM **1604.**

Although the present invention has been shown and described with respect to several preferred embodiments thereof, various changes, omissions and additions to the form and detail thereof, may be made therein, without departing from the spirit and scope of the invention. For instance, in all of the embodiments, the tuning and switching can be performed using any known actuation method, such as thermo-optic, electro-optic, magneto-optic or stress-optic tuning, or any combination thereof. Couplers can take any form including directional couplers, MMI couplers, or MZI couplers and can be tunable (for trimming) or non-tunable. MZI couplers can be symmetric or asymmetric.' MMI couplers can have any shape including rectangular and tapered (e.g., parabolic). Tunability as illustrated by arrows, and connections indicating simultaneous actuation of elements as illustrated by dashed lines, can be used or not. Reflective filters can be used in place of 180° bends. Switches can be based on any design including digital optical switches (based on Y-branches, X-junctions or other structures), MMIs, or MZIs. MZIs include Generalized MZIs (GMZIs), which consist of a pair of cascaded MMI couplers with thermal phase shifters on the connecting arms. Switches can be single-stage or multi-stage. Further, DEMUXs can be used as MUXs by using the input ports as output ports and the output ports as input ports.

It is described herein :
- A dynamic optical add/drop multiplexer comprising:
   a single substrate;
   a first optical circulator having a first port to receive a multiple wavelength optical signal, a second port to output the received multiple wavelength optical signal, and a third port;
   a tunable reflective filter connected to the second port of the first circulator to receive the optical signal wherein the filter segregates a tuned wavelength from the optical signal and reflects the tuned wavelength back to the first circulator, which outputs the tuned wavelength via the third port;
   a second optical circulator having a first port to receive the optical signal from the filter, a second port to receive an add optical signal comprising the same wavelength as the tuned wavelength, and a third port to output the multiple wavelength optical signal and the add optical signal; and
wherein the first circulator, second circulator and tunable reflective filter are all formed on the single substrate.
- A dynamic optical add/drop multiplexer, as above, wherein the tunable reflective filter is a tunable Bragg grating.
- A dynamic optical add/drop multiplexer, as above, wherein the first and second circulator are based on planar Mach-Zehnder interferometers using either polarization splitting and nonreciprocal polarization conversion, or nonreciprocal phase shift within the interferometric arms.

It is further described herein:
- A trimmable MZI-based dynamic optical add/drop multiplexer comprising:
   a first optical path having a tunable reflective filter formed therein;
   a first phase shifter associated with the first optical path;
   a second optical path having a tunable reflective filter formed therein;
   a second phase shifter associated with the second optical path;
   a first 3dB coupler having a first port to receive a multiple wavelength optical signal and substantially evenly split the signal into the first optical path and the second optical path wherein the tunable reflective filters of the first and second paths segregate a tuned wavelength from the split optical signal and reflect the tuned wavelength back to the first 3dB coupler, which outputs the tuned wavelength via a second port;
   a second 3dB coupler to receive the split optical signal from the first and second optical paths and to combine the split signal into a single signal output via a first port, the second 3dB coupler having a second port to receive an add optical signal comprising the same wavelength as the tuned wavelength wherein the add optical signal is additionally output via the first port;
wherein the optical lengths of the first and second optical path are balanced by the phase shifters.
- A trimmable MZI-based dynamic optical add/drop multiplexer, as above, wherein the first and second couplers are directional couplers.
- A trimmable MZI-based dynamic optical add/drop multiplexer, as above, wherein the couplers are MMI based couplers.
- A trimmable MZI-based dynamic optical add/drop multiplexer, as above, wherein the couplers are MZI-based couplers.
- A trimmable MZI-based dynamic optical add/drop multiplexer, as above, wherein the tunable reflective filter is a tunable Bragg grating.

It is further described herein :
- An optical device comprising:
   a first directive coupler having a first port to receive a multiple wavelength optical signal, a second port to output the received multiple wavelength optical signal, and a third port;
   a tunable reflective filter connected to the second port of the first directive coupler to receive the optical signal wherein the filter segregates a tuned wavelength from the optical signal and reflects the tuned wavelength back to the first directive coupler, which outputs the tuned wavelength via the third port;
   a second directive coupler having a first port to receive the optical signal from the filter, a second port to output the multiple wavelength optical signal, and a third port, wherein any optical signals input the third port are output via the first port;
   a switch having a input port connected to the third port of the first directive coupler to receive the tuned wavelength, a first output port connected to the third port of the second directive coupler, and a second output port:
   the switch in a first state causes the tuned wavelength to be output to the third port of the second directive coupler via the first output port of the switch; and
   the switch in a second state causes the tuned wavelength to be output via the second output port of the switch.
- An optical device, as above, wherein the switch is a cross bar switch further having an add port;
   the switch in the first state further causes an add optical signal input to the add port to be output via the second output port of the switch, the add optical signal comprising the same wavelength as the tuned wavelength; and
   the switch in the second state further causes an add optical signal input to the add port to be output to the third port of the second directive coupler via the first output port of the switch, the add optical signal comprising the same wavelength as the tuned , wavelength.
- An optical device, as above, wherein the optical device is a hitless dynamic optical add/drop multiplexer.
- An optical device, as above wherein the tunable reflective filter is a tunable Bragg grating.
- An optical device, as above, wherein the first and second directive couplers are optical circulators.
- An optical device, as above, wherein the tunable reflective filter and the cross bar switch are formed on the same substrate.
- An optical device, as above, wherein the tunable reflective filter, the cross bar switch and the optical circulators are formed on the same substrate.
- An optical device, as above, wherein :
   the tunable reflective filter comprises a single Bragg grating spanning two optical paths;
   the first directive coupler comprises a 3dB coupler connected to the two optical paths so as to substantially evenly split the multiple wavelength optical signal into both optical paths; and
   the second directive coupler comprises a 3dB coupler receiving the split optical signal from the two optical paths.
- A multi-channel hitless optical add/drop multiplexer comprising a cascade of hitless dynamic optical add/drop multiplexers as above
- A multi-channel hitless optical add/drop multiplexer, as above wherein the optical device is a hitless dynamic multiplexer/demultiplexer,

It is further described herein :
- An optical device comprising:
   a first and second directive coupler having at least one tunable reflective filter connected therebetween, the first directive coupler having a first port to receive a multiple wavelength optical signal, a second port to output the received multiple wavelength optical signal to the at least on filter, and a third port, the filter segregates a tuned wavelength from the optical signal and reflects the tuned wavelength back to the first directive coupler, which outputs the tuned wavelength via the third port, the second directive coupler having a first port to receive the optical signal from the filter, a second port to output the multiple wavelength optical signal, and a third port, wherein any optical signals input the third port are output via the first port;
   a third and fourth directive coupler having at least one tunable reflective filter connected therebetween, the third directive coupler having a first port to receive a multiple wavelength optical signal, a second port to output the received multiple wavelength optical signal to the at least on filter, and a third port, the filter segregates at least one tuned wavelength from the optical signal and reflects the tuned wavelength back to the third directive coupler, which outputs the tuned wavelength via the third port, the fourth directive coupler having a first port to receive the optical signal from the filter, a second port to output the multiple wavelength optical signal, and a third port, wherein any optical signals input the third port are output via the first port; and
   a cross bar switch, the cross bar switch in a first state connects the third port of the first directive coupler to the third port of the fourth directive coupler and connects the third port of the third directive coupler to the third port of the second directive coupler, the cross bar switch in a second state connects the third port of the first directive coupler to the third port of the second directive coupler and connects the third port of the third directive coupler to the third port of the fourth directive coupler.
   A optical device, as above, wherein the at least one filter connected between the first and second directive couplers comprises a plurality of tunable reflective filters and the at least one filter connected between the second and third directive couplers comprises a plurality of tunable reflective filters.
- A hitless dynamic wavelength selective switch comprising a cascade of optical devices as above.
- An hitless dynamic optical cross connect comprising a cascade of optical devices as above.

It is further described herein:
- A hitless errorless dynamic optical add/drop multiplexer comprising:
   a first optical circulator having a first port to receive a multiple wavelength optical signal, a second port to output the received multiple wavelength optical signal, and a third port;
   a first switch having an input port, a first output port, and a second output, the input port connected to the second port of the first circulator;
   a filter path comprising a tunable reflective filter connected to the first output port of the first switch;
   a bypass path comprising an optical path connected to the second output port of the first switch;
   a second switch having a first input port connected to the filter path, a second input port connected to the optical path, and an output port;
   the first and second switch in a first state causes the optical signal to be directed along the filter path wherein the reflective filter segregates a tuned wavelength from the optical signal and reflects the tuned wavelength back to the first circulator, which outputs the tuned wavelength via the third port;
   the first and second switch in a second state cause the optical signal to be directed along the bypass path which leaves the optical signal substantially unaffected; and
   a second optical circulator having a first port connected to the output port of the second switch to receive the optical signal from the second switch, a second port to output the optical signal and a third port to receive an add optical signal, the add optical signal comprising the same wavelength as the tuned wavelength, the add optical signal output via the second port with the optical signal.
- A hitless errorless dynamic optical add/drop multiplexer as above formed on a single substrate.
- A multi-channel hitless errorless dynamic optical add/drop multiplexer comprising a cascade of hitless errorless dynamic optical add/drop multiplexers as above.
- A polarization independent hitless dynamic errorless optical add/drop multiplexer comprising:
   a first hitless dynamic errorless optical add drop multiplexer as above
   a second hitless dynamic errorless optical add drop multiplexer as above
   a first polarization splitter having an input port, a first output port connected to the first port of the first circulator of the first multiplexer, and a second output port connected to the first port of the first circulator of the second multiplexer;
   a first polarization combiner having an output port, a first input port connected to the third port of the first circulator of the first multiplexer, and a second input port connected to the third port of the first circulator of the second multiplexer;
   a second polarization splitter having an input port, a first output port connected to the third port of the second circulator of the first multiplexer, and a second output port connected to the third port of the second circulator of the second multiplexer; and
   a second polarization combiner having an output port, a first input port connected to the second port of the second circulator of the first multiplexer, and a second input port connected to the second port of the second circulator of the second multiplexer.
- A multistage polarization independent hitless dynamic errorless add/drop multiplexer that operates over a specified optical spectrum, the multiplexer comprising:
   a first polarization independent hitless dynamic errorless optical add/drop multiplexer as above that operates over a portion of the specified spectrum;
   a second polarization independent hitless dynamic errorless optical add/drop multiplexer as above that operates over a portion of the specified spectrum different from the portion the first multiplexer operates on;
   a first switch having an input port, a first output port connected to the input port of the first polarization splitter of the first polarization independent hitless dynamic errorless optical add/drop multiplexer, a second output port connected to the input port of the first polarization splitter of the second polarization independent hitless dynamic errorless optical add/drop multiplexer;
   a second switch having an output port, a first input port connected to the output port of the first polarization combiner of the first polarization independent hitless dynamic errorless optical add/drop multiplexer, a second input port connected to the output port of the first polarization splitter of the second polarization independent hitless dynamic errorless optical add/drop multiplexer;
   a third switch having an input port, a first output port connected to the input port of the second polarization splitter of the first polarization independent hitless dynamic errorless optical add/drop multiplexer, a second output port connected to the input port of the second polarization splitter of the second polarization independent hitless dynamic errorless optical add/drop multiplexer;
   a fourth switch having an output port, a first input port connected to the output port of the second polarization combiner of the first polarization independent hitless dynamic errorless optical add/drop multiplexer, a second input port connected to the output port of the second polarization splitter of the second polarization independent hitless dynamic errorless optical add/drop multiplexer.

It is further described herein:
- A hitless errorless dynamic optical add/drop multiplexer comprising:
   a first optical path having a tunable reflective filter formed therein;
   a second optical path having a tunable reflective filter formed therein;
   a first switch having an input port to receive a multiple wavelength optical signal, a first output port to output the optical signal when the first switch is in a first state, and a second output port to output the optical signal when the first switch is in a second state;
   a first 3dB coupler having a first port connected to the second output port of the first switch to receive the multiple wavelength optical signal and substantially evenly split the signal into the first optical path and the second optical path wherein the tunable reflective filters of the first and second paths segregate a tuned wavelength from the split optical signal and reflect the tuned wavelength back to the first 3dB coupler, which outputs the tuned wavelength via a second port;
   a second 3dB coupler to receive the split optical signal from the first and second optical paths and to combine the split signal into a single signal output via a first port, the second 3dB coupler having a second port to receive an add optical signal comprising the same wavelength as the tuned wavelength wherein the add optical signal is additionally output via the first port; and
   a second switch having a first input port connected to the first port of the second 3dB coupler to receive the optical signals, a second input port operatively connected to the second output port of the first switch by a bypass optical path, and an output port to output optical signals from the second 3dB coupler when the second switch is in a first state and to output optical signals from the bypass optical path when the second switch is in a second state.
- A hitless errorless dynamic optical add/drop multiplexer, as above, wherein the first and second switches are directional couplers.
- A hitless errorless dynamic optical add/drop multiplexer, as above, wherein the first and second switches are MMI-based switches.
- A hitless errorless dynamic optical add/drop multiplexer, as above, wherein the first and second switches are MZI-based switches.
- A multi-channel hitless errorless dynamic optical add/drop multiplexer comprising a cascade of hitless errorless dynamic optical add/drop multiplexers as above,
- A polarization independent hitless dynamic errorless optical add/drop multiplexer comprising:
   a first hitless dynamic errorless optical add drop multiplexer as above
   a second hitless dynamic errorless optical add drop multiplexer as above
   a first polarization splitter having an input port, a first output port connected to the input port of the first switch of the first multiplexer, and a second output port connected to the input port of the first switch of the second multiplexer;
   a first polarization combiner having an output port, a first input port connected to the second port of the first 3dB coupler of the first multiplexer, and a second input port connected to the second port of the first 3dB coupler of the second multiplexer;
   a second polarization splitter having an input port, a first output port connected to the second port of the second 3dB coupler of the first multiplexer, and a second output port connected to the second port of the second 3dB coupler of the second multiplexer; and
   a second polarization combiner having an output port, a first input port connected to the output port of the second switch of the first multiplexer, and a second input port connected to the output port of the second switch of the second multiplexer.
- A multistage polarization independent hitless dynamic errorless add/drop multiplexer that operates over a specified optical spectrum, the multiplexer comprising:
   a first polarization independent hitless dynamic errorless optical add/drop multiplexer as above that operates over a portion of the specified spectrum;
   a second polarization independent hitless dynamic errorless optical add/drop multiplexer as above that operates over a portion of the specified spectrum different from the portion the first multiplexer operates on;
   a first switch having an input port, a first output port connected to the input port of the first polarization splitter of the first polarization independent hitless dynamic errorless optical add/drop multiplexer, a second output port connected to the input port of the first polarization splitter of the second polarization independent hitless dynamic errorless optical add/drop multiplexer;
   a second switch having an output port, a first input port connected to the output port of the first polarization combiner of the first polarization independent hitless dynamic errorless optical add/drop multiplexer, a second input port connected to the output port of the first polarization splitter of the second polarization independent hitless dynamic errorless optical add/drop multiplexer;
   a third switch having an input port, a first output port connected to the input port of the second polarization splitter of the first polarization independent hitless dynamic errorless optical add/drop multiplexer, a second output port connected to the input port of the second polarization splitter of the second polarization independent hitless dynamic errorless optical add/drop multiplexer;
   a fourth switch having an output port, a first input port connected to the output port of the second polarization combiner of the first polarization independent hitless dynamic errorless optical add/drop multiplexer, a second input port connected to the output port of the second polarization splitter of the second polarization independent hitless dynamic errorless optical add/drop multiplexer.

## Claims

1. A hitless errorless dynamic optical add/drop multiplexer comprising:
a first optical circulator having a first port to receive a multiple wavelength Optical signal, a second port to output the received multiple wavelength optical signal, and a third port;
a first switch having an input port, a first output port, and a second output, the input port connected to the second port of the first circulator;
a filter path comprising a tunable reflective filter connected to the first output port of the first switch;
a bypass path comprising an optical path connected to the second output port of the first switch; ,
a second switch having a first input port connected to the filter path, a second input port connected to the optical path, and an output port;
the first and second switch in a first state causes the optical signal to be directed along the filter path wherein the reflective filter segregates a tuned wavelength from the optical signal and reflects the tuned wavelength back to the first circulator, which outputs the tuned wavelength via the third port;
the first and second switch in a second state cause the optical signal to be directed along the bypass path which leaves the optical signal substantially unaffected; and
a second optical circulator having a first port connected to the output port of the second switch to receive the optical signal from the second switch, a second port to output the optical signal and a third port to receive an add optical signal, the add optical signal comprising the same wavelength as the tuned wavelength, the add optical signal output via the second port with the optical signal.

2. A hitless errorless dynamic optical add/drop multiplexer according to claim 1 formed on a single substrate.

3. A multi-channel hitless errorless dynamic optical add/drop multiplexer comprising a cascade of hitless errorless dynamic optical add/drop multiplexers according to claim 1.

4. A polarization independent hitless dynamic errorless optical add/drop multiplexer comprising:
a first hitless dynamic errorless optical add drop multiplexer according to claim 1;
a second hitless dynamic errorless optical add drop multiplexer according to claim 1;
a first polarization splitter having an input port, a first output port connected to the first port of the first circulator of the first multiplexer, and a second output port connected to the first port of the first circulator of the second multiplexer;
a first polarization combiner having an output port, a first input port connected to the third port of the first circulator of the first multiplexer, and a second input port connected to the third port of the first circulator of the second multiplexer;
a second polarization splitter having an input port, a first output port connected to the third port of the second circulator of the first multiplexer, and a second output port connected to the third port of the second circulator of the second multiplexer; and
a second polarization combiner having an output port, a first input port connected to the second port of the second circulator of the first multiplexer, and a second input port connected to the second port of the second circulator of the second multiplexer,

5. A multistage polarization independent hitless dynamic.errorless add/drop multiplexer that operates over a specified optical spectrum, the multiplexer comprising:
a first polarization independent hitless dynamic errorless optical add/drop multiplexer according to claim 4 that operates over a portion of the specified spectrum;
a second polarization independent hitless dynamic errorless optical add/drop multiplexer according to claim 4 that operates over a portion of the specified spectrum different from the portion the first multiplexer operates on;
a first switch having an input port, a first output port connected to the input port of the first polarization splitter of the first polarization independent hitless dynamic errorless optical add/drop multiplexer, a second output port connected to the input port of the first polarization splitter of the second polarization independent hitless dynamic errorless optical add/drop multiplexer;
a second switch having an output port, a first input port connected to the output port of the first polarization combiner of the first polarization independent hitless dynamic errorless optical add/drop multiplexer, a second input port connected to the output port of the first polarization splitter of the second polarization independent hitless dynamic errorless optical add/drop multiplexer;
a third switch having an input port, a first output port connected to the input port of the second polarization splitter of the first polarization independent hitless dynamic errorless optical add/drop multiplexer, a second output port connected to the input port of the second polarization splitter of the second polarization independent hitless dynamic errorless optical add/drop multiplexer;
a fourth switch having an output port, a first input port connected to the output port of the second polarization combiner of the first polarization independent hitless dynamic errorless optical add/drop multiplexer, a second input port connected to the output port of the second polarization splitter of the second polarization independent hitless dynamic errorless optical add/drop multiplexer.

6. A hitless errorless dynamic optical add/drop multiplexer comprising:
a first optical path having a tunable reflective filter formed therein;
a second optical path having a tunable reflective filter formed therein;
a first switch having an input port to receive a multiple wavelength optical signal, a first output port to output the optical signal when the first switch is in a first state, and a second output port to output the optical signal when the first switch is in a second state;
a first 3dB coupler having a first port connected to the second output port of the first switch to receive the multiple wavelength optical signal and substantially evenly split the signal into the first optical path and the second optical path wherein the tunable reflective filters of the first and second paths segregate a tuned wavelength from the split optical signal and reflect the tuned wavelength back to the first 3dB coupler, which outputs the tuned wavelength via a second port;
a second 3dB coupler to receive the split optical signal from the first and second optical paths and to combine the split signal into a single signal output via a first port, the second 3dB coupler having a second port to receive an add optical signal comprising the same wavelength as the tuned wavelength wherein the add optical signal is additionally output via the first port; and
a second switch having a first input port connected to the first port of the second 3dB coupler to receive the optical signals, a second input port operatively connected to the second output port of the first switch by a bypass optical path, and an output port to output optical signals from the second 3dB coupler when the second switch is in a first state and to output optical signals from the bypass optical path when the second switch is in a second state.

7. A hitless errorless dynamic optical add/drop multiplexer, as per claim 6, wherein the first and second switches are directional couplers.

8. A hitless errorless dynamic optical add/drop multiplexer, as per claim 6, wherein the first and second switches are MMI-based switches.

9. A hitless errorless dynamic optical add/drop multiplexer, as per claim 6, wherein the first and second switches are MZI-based switches.

10. A multi-channel hitless errorless dynamic optical add/drop multiplexer comprising a cascade of hitless errorless dynamic optical add/drop multiplexers according to claim 6.

11. A polarization independent hitless dynamic errorless optical add/drop multiplexer comprising:
a first hitless dynamic errorless optical add drop multiplexer according to claim 6;
a second hitless dynamic errorless optical add drop multiplexer according to claim 6;
a first polarization splitter having an input port, a first output port connected to the input port of the first switch of the first multiplexer, and a second output port connected to the input port of the first switch of the second multiplexer;
a first polarization combiner having an output port, a first input port connected to the second port of the first 3dB coupler of the first multiplexer, and a second input port connected to the second port of the first 3dB coupler of the second multiplexer;
a second polarization splitter having an input port, a first output port connected to the second port of the second 3dB coupler of the first multiplexer, and a second output port connected to the second port of the second 3dB coupler of the second multiplexer; and
a second polarization combiner having an output port, a first input port connected to the output port of the second switch of the first multiplexer, and a second input port connected to the output port of the second switch of the second multiplexer.

12. A multistage polarization independent hitless dynamic errorless add/drop multiplexer that operates over a specified optical spectrum, the multiplexer comprising:
a first polarization independent hitless dynamic errorless optical add/drop multiplexer according to claim 11 that operates over a portion of the specified spectrum;
a second polarization independent hitless dynamic errorless optical add/drop multiplexer according to claim 11 that operates over a portion of the specified spectrum different from the portion the first multiplexer operates on;
a first switch having an input port, a first output port connected to the input port of the first polarization splitter of the first polarization independent hitless dynamic errorless optical add/drop multiplexer, a second output port connected to the input port of the first polarization splitter of the second polarization independent hitless dynamic errorless optical add/drop multiplexer;
a second switch having an output port, a first input port connected to the output port of the first polarization combiner of the first polarization independent hitless dynamic errorless optical add/drop multiplexer, a second input port connected to the output port of the first polarization splitter of the second polarization independent hitless dynamic errorless optical add/drop multiplexer;
a third switch having an input port, a first output port connected to the input port of the second polarization splitter of the first polarization independent hitless dynamic errorless optical add/drop multiplexer, a second output port connected to the input port of the second polarization splitter of the second polarization independent hitless dynamic errorless optical add/drop multiplexer;
a fourth switch having an output port, a first input port connected to the output port of the second polarization combiner of the first polarization independent hitless dynamic errorless optical add/drop multiplexer, a second input port connected to the output port of the second polarization splitter of the second polarization independent hitless dynamic errorless optical add/drop multiplexer.
